(19) Europäisches Patentamt
European Patent Office
Office européen des brevets

(11) EP 4 561 158 A1

(12) **EUROPEAN PATENT APPLICATION**
published in accordance with Art. 153(4) EPC

(43) Date of publication:
**28.05.2025 Bulletin 2025/22**

(21) Application number: **23843431.0**

(22) Date of filing: **21.07.2023**

(51) International Patent Classification (IPC):
***H04W 24/08*** (2009.01) ***H04W 72/02*** (2009.01)
***H04W 72/20*** (2023.01) ***H04W 72/04*** (2023.01)
***H04L 5/00*** (2006.01)

(52) Cooperative Patent Classification (CPC):
**H04L 5/00; H04W 24/08; H04W 72/02; H04W 72/04; H04W 72/20**

(86) International application number:
**PCT/KR2023/010578**

(87) International publication number:
**WO 2024/019585 (25.01.2024 Gazette 2024/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.07.2022 KR 20220090421**
**22.07.2022 US 202263391701 P**
**24.07.2022 US 202263391793 P**
**11.10.2022 US 202263415242 P**

(71) Applicant: **LG Electronics Inc.**
**Yeongdeungpo-gu**
**Seoul 07336 (KR)**

(72) Inventors:
- **KO, Woosuk**
  **Seoul 06772 (KR)**
- **LEE, Youngdae**
  **Seoul 06772 (KR)**
- **KO, Hyunsoo**
  **Seoul 06772 (KR)**
- **SEO, Hanbyul**
  **Seoul 06772 (KR)**
- **LEE, Seungmin**
  **Seoul 06772 (KR)**
- **LEE, Jeongsu**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR PERFORMING WIRELESS COMMUNICATION RELATED TO SL POSITIONING**

(57) Proposed are a method by which a first device performs wireless communication and an apparatus supporting same. For example, the first device may acquire information related to a PRS configuration. For example, the information related to the PRS configuration may include at least one of information regarding an ID of a PRS resource, information regarding an ID of a PRS sequence, information regarding a start slot of the PRS resource, and information regarding a start symbol of the PRS resource. For example, the first device may transmit a DCR message including information related to a service relating to SL positioning. For example, the first device may receive a DCA message related to the DCR message.

FIG. 19

Obtaining information related to a PRS configuration
S1910
Transmitting a DCR message including information related to a service related to SL positioning
S1920
Receiving a DCA message related to DCR message
S1930

EP 4 561 158 A1

## Description

## TECHNICAL FIELD

This disclosure relates to a wireless communication system.

## BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

## DISCLOSURE

## TECHNICAL SOLUTION

According to an embodiment, a method for performing wireless communication by a first device is provided. For example, the first device may obtain information related to a positioning reference signal (PRS) configuration. For example, the information related to the PRS configuration may include at least one of information related to an ID of a PRS resource, information related to an ID of a PRS sequence, information related to a starting slot of the PRS resource, or information related to a starting symbol of the PRS resource. For example, the first device may transmit a direct communication request (DCR) message including information related to a service related to sidelink (SL) positioning. For example, the first device may receive a direct communication accept (DCA) message related to the DCR message.

According to an embodiment, the first device performing wireless communication may be provided. The first device may comprise at least one transceiver; at least one processor; and at least one memory connected to the at least one processor and storing instructions that, based on being executed by the at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, the apparatus configured for control the first device may be provided. The apparatus may comprise at least one processor; and at least one memory connected to the at least one processor and storing instructions that, based on being executed by the at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, a non-transitory computer-readable storage medium storing instructions may be provided. The instructions that, based on being executed by at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, a method for performing wireless communication by a second device is provided. For example, the second device may obtain information related to a positioning reference signal (PRS) configuration. For example, the information related to the PRS configuration may include at least one of information related to an ID of a PRS resource, information related to an ID of a PRS sequence, information related to a starting slot of the PRS resource, or information related to a starting symbol of the PRS resource. For example, the second device may receive a direct communication request (DCR) message including information related to a service related to sidelink (SL) positioning. For example, the second device may transmit a direct communication accept (DCA) message related to the DCR message.

According to an embodiment, the second device performing wireless communication may be provided. The second device may comprise at least one transceiver; at least one processor; and at least one memory connected to the at least one processor and storing instructions that, based on being executed by the at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

According to an embodiment, the apparatus configured for control the second device may be provided. The apparatus may comprise at least one processor; and at least one memory connected to the at least one processor and storing instructions that, based on being executed by the at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

According to an embodiment, a non-transitory computer-readable storage medium storing instructions may be provided. The instructions that, based on being executed by at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

## BRIEF DESCRIPTION OF THE DRAWINGS

FIG. 1 shows a communication structure that can be provided in the 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows three cast types, based on an embodiment of the present disclosure.

FIG. 10 shows a synchronization source or synchronization reference of V2X, based on an embodiment of the present disclosure.

FIG. 11 shows an example of an architecture of a 5G system capable of positioning a UE having access to a next generation-radio access network (NG-RAN) or an E-UTRAN based on an embodiment of the present disclosure.

FIG. 12 shows an example of implementing a network for measuring a location of a UE based on an embodiment of the present disclosure.

FIG. 13 shows an example of a protocol layer used to support LTE positioning protocol (LPP) message transmission between an LMF and a UE based on an embodiment of the present disclosure.

FIG. 14 shows an example of a protocol layer used to support NR positioning protocol A (NRPPa) PDU transmission between an LMF and an NG-RAN node based on an embodiment of the present disclosure.

FIG. 15 is a drawing for explaining an OTDOA positioning method based on an embodiment of the present disclosure.

FIG. 16 shows a double-side RTT, according to one embodiment of the present disclosure.

FIG. 17 is a drawing to explain a method for performing wireless communications associated with SL positioning, based on an embodiment of the present disclosure.

FIG. 18 is a drawing to explain a procedure for performing wireless communications associated with SL positioning, based on an embodiment of the present disclosure.

FIG. 19 shows a method for performing wireless communication by a first device, based on an embodiment of the present disclosure.

FIG. 20 shows a method for performing wireless communication by a second device, based on an embodiment of the present disclosure.

FIG. 21 shows a communication system 1, based on an embodiment of the present disclosure.

FIG. 22 shows wireless devices, based on an embodiment of the present disclosure.

FIG. 23 shows a signal process circuit for a transmission signal, based on an embodiment of the present disclosure.

FIG. 24 shows another example of a wireless device, based on an embodiment of the present disclosure.

FIG. 25 shows a hand-held device, based on an embodiment of the present disclosure.

FIG. 26 shows a vehicle or an autonomous vehicle, based on an embodiment of the present disclosure.

## DETAILED DESCRIPTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

[Table 1]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency.

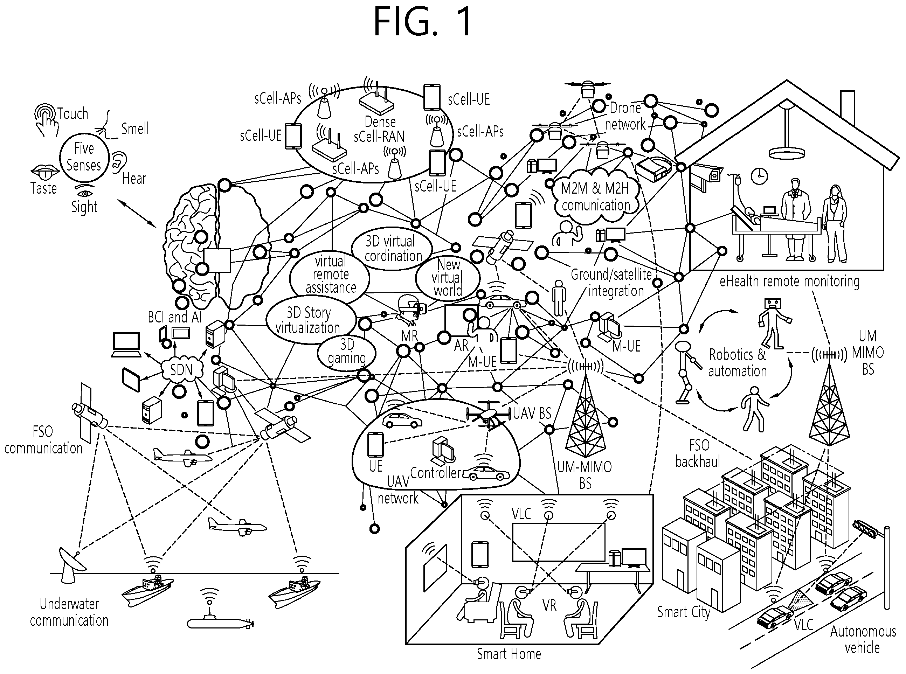

FIG. 1 shows a communication structure providable in a 6G system, based on an embodiment of the present disclosure. The embodiment of FIG. 1 may be combined with various embodiments of the present disclosure.

New network characteristics in 6G may include:

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.

- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

The following describes the key enabling technologies for 6G systems.

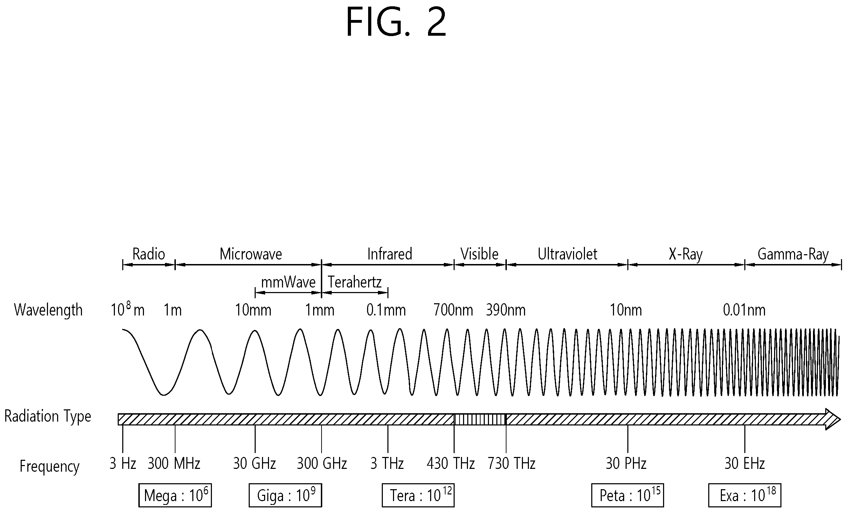

- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.

- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system.

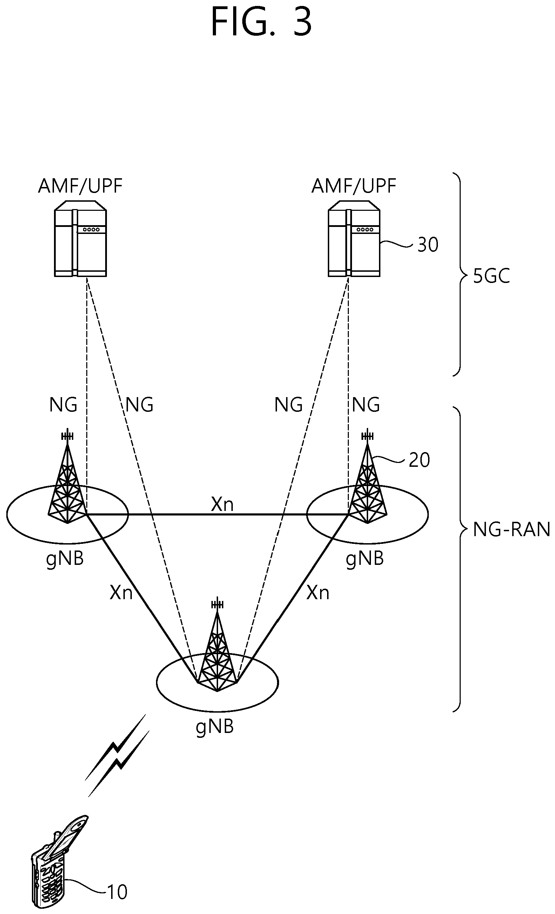

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

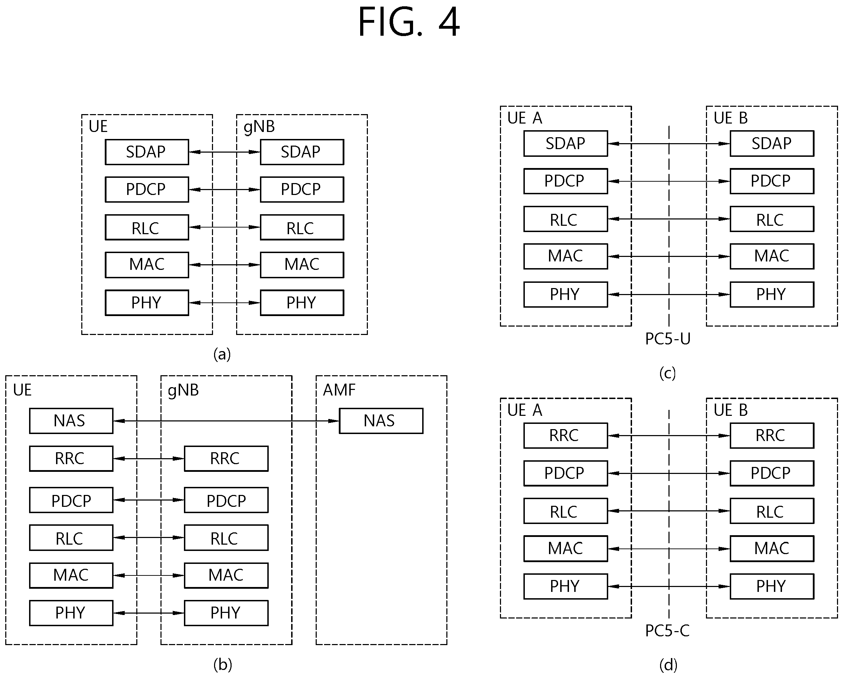

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

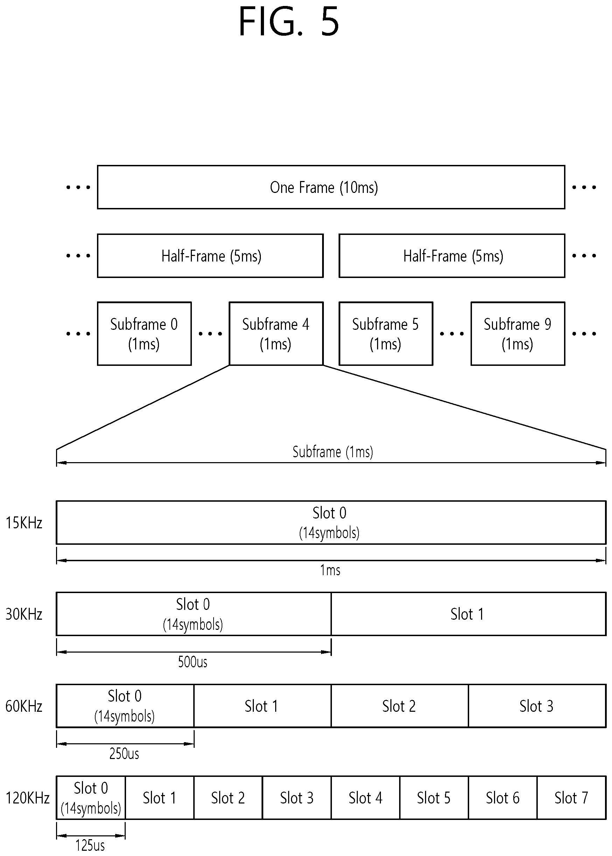

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP or extened CP is used.

[Table 2]

| CP type | SCS (15*2^u) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

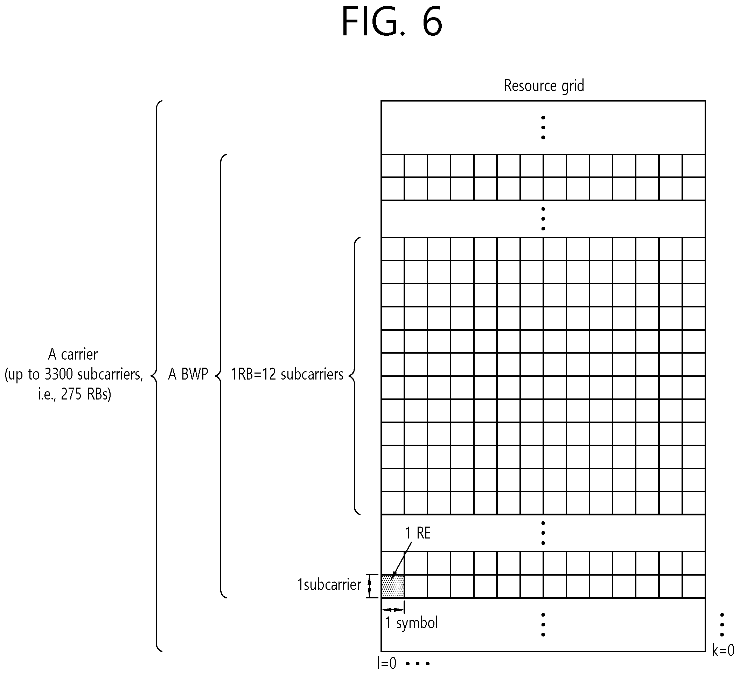

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

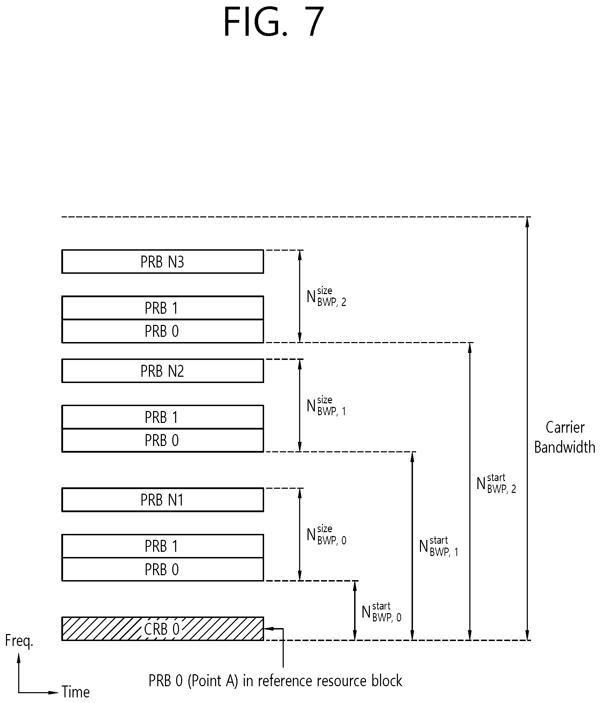

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

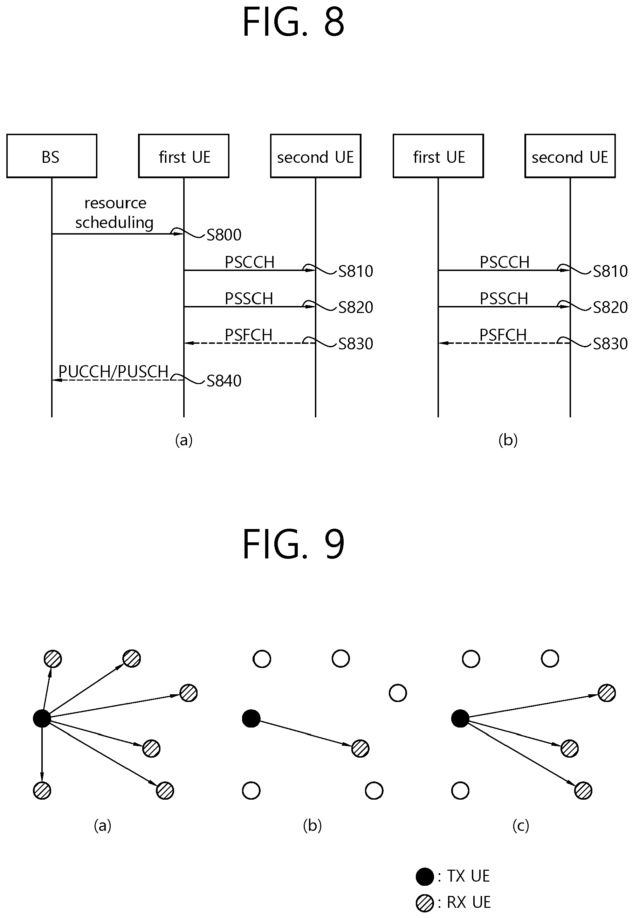

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or $1^{st}$-stage SCI) to a second UE based on the resource scheduling. In step S820, the first UE may transmit a PSSCH (e.g., $2^{nd}$-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:

- Resource pool index - ceiling ($\log_2 I$) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling ($\log_2(N^{SL}_{subChannel})$) bits
- SCI format 1-A fields: frequency resource assignment, time resource assignment
- PSFCH-to-HARQ feedback timing indicator - ceiling ($\log_2 N_{fb_timing}$) bits, where $N_{fb_timing}$ is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or $1^{st}$-stage SCI) to a second UE by using the resource(s). In step S820, the first UE may transmit a PSSCH (e.g., $2^{nd}$-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a $1^{st}$ SCI, a first SCI, a $1^{st}$-stage SCI or a $1^{st}$-stage SCI format, and a SCI transmitted through a PSSCH may be referred to as a $2^{nd}$ SCI, a second SCI, a $2^{nd}$-stage SCI or a $2^{nd}$-stage SCI format. For example, the $1^{st}$-stage SCI format may include a SCI format 1-A, and the 2nd-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling ($\log_2(N^{SL}_{subChanne}(N^{SL}_{subChannel+1})/2)$) bits when the value of the higher layer parameter sl-MaxNumPerReserve is configured to 2; otherwise ceiling $\log_2(N^{SL}_{subChannel}(N^{SL}_{subchannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling ($\log_2 N_{rsv_period}$) bits, where $N_{rsv_period}$ is the number of entries in the higher layer parameter sl-ResourceReservePeriodList, if higher layer parameter sl-MultiReserveResource is configured; 0 bit otherwise
- DMRS pattern - ceiling ($\log_2 N_{pattern}$) bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described. SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, prioTX;
- the remaining packet delay budget;
- the number of sub-channels to be used for the PSSCH/PSCCH transmission in a slot, LsubCH;
- optionally, the resource reservation interval, Prsvp_TX, in units of msec.
- if the higher layer requests the UE to determine a subset of resources from which the higher layer will select resources for PSSCH/PSCCH transmission as part of re-evaluation or pre-emption procedure, the higher layer provides a set of resources (r0, r1, r2, ...) which may be subject to re-evaluation and a set of resources (r'0, r'1, r'2, ...) which may be subject to pre-emption.
- it is up to UE implementation to determine the subset of resources as requested by higher layers before or after the slot ri" - T3, where ri" is the slot with the smallest slot index among (r0, r1, r2, ...) and (r'0, r'1, r'2, ...), and T3 is equal to TSLproc,1, where TSLproc,1 is the number of slots determined based on the SCS configuration of the SL BWP.

The following higher layer parameters affect this procedure:

- sl-SelectionWindowList: internal parameter T2min is set to the corresponding value from higher layer parameter sl-SelectionWindowList for the given value of prioTX.
- sl-Thres-RSRP-List: this higher layer parameter provides an RSRP threshold for each combination (pi, pj), where pi is the value of the priority field in a received SCI format 1-A and pj is the priority of the transmission of the UE selecting resources; for a given invocation of this procedure, pj = prioTX.
- sl-RS-ForSensing selects if the UE uses the PSSCH-RSRP or PSCCH-RSRP measurement.
- sl-ResourceReservePeriodList
- sl-SensingWindow: internal parameter T0 is defined as the number of slots corresponding to sl-SensingWindow msec.
- sl-TxPercentageList: internal parameter X for a given prioTX is defined as sl-TxPercentageList (prioTX) converted from percentage to ratio.
- sl-PreemptionEnable: if sl-PreemptionEnable is provided, and if it is not equal to 'enabled', internal parameter priopre is set to the higher layer provided parameter sl-PreemptionEnable.

The resource reservation interval, Prsvp_TX, if provided, is converted from units of msec to units of logical slots, resulting in P'rsvp_TX.

Notation:

(t'SL0, t'SL1, t'SL2, ...) denotes the set of slots which belongs to the sidelink resource pool.

For example, the UE may select a set of candidate resources (SA) based on Table 8. For example, if resource (re) selection is triggered, the UE may select a set of candidate resources (SA) based on Table 11. For example, if re-evaluation or pre-emption is triggered, the UE may select a set of candidate resources (SA) based on Table 8.

[Table 8]

| The following steps are used:<br>1) A candidate single-slot resource for transmission $R_{x,y}$ is defined as a set of $L_{subCH}$ contiguous sub-channels with sub-channel *x+j* in slot $t'^{SL}_{y}$ where *j* = 0,..., $L_{subCH}$ - |
|---|

(continued)

1. The UE shall assume that any set of $L_{subCH}$ contiguous sub-channels included in the corresponding resource pool within the time interval [$n + T_1$, $n + T_2$] correspond to one candidate single-slot resource, where

- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;
- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).

The total number of candidate single-slot resources is denoted by $M_{total}$.

2) The sensing window is defined by the range of slots $[n - T_0, n - T^{SL}_{proc,0})$ where $T_0$ is defined above and $T^{SL}_{proc,0}$ is def ined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.

3) The internal parameter $Th(p_i,p_j)$ is set to the corresponding value of RSRP threshold indicated by the i-th field in *sl-Thres-RSRP-List,* where $i = p_i + (P_j - 1) * 8$.

4) The set $S_A$ is initialized to the set of all the candidate single-slot resources.

*5)* The UE shall exclude any candidate single-slot resource $R_{x,y}$ from the set $S_A$ if it meets all the following conditions:

- the UE has not monitored slot $t'^{SL}_m$ in Step 2.
- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.

5a) If the number of candidate single-slot resources $R_{x,y}$ remaining in the set $S_A$ is smaller than $X \cdot M_{total}$, the set $S_A$ is initialized to the set of all the candidate single-slot resources as in step 4.

6) The UE shall exclude any candidate single-slot resource $R_{x,y}$ from the set $S_A$ if it meets all the following conditions:

a) the UE receives an SCI format 1-A in slot $t'^{SL}_m$*, and 'Resource reservation period'* field, if present, and *'Priority'* field in the received SCI format 1-A indicate the values $P_{rsvp_RX}$ and $prio_{RX}$, respectively according to Clause 16.4 in [6, TS 38.213];

b) the RSRP measurement performed, according to clause 8.4.2.1 for the received SCI format 1-A, is higher than $Th$ ($prio_{RX}$, $prio_{TX}$);

c) the SCI format received in slot $t'^{SL}_m$ or the same SCI format which, if and only if the *'Resource reservation period'* field is present in the received SCI format 1-A, is assumed to be received in slot(s) $t'^{SL}_{m+q\times P'_{rsvp_RX}}$ determines according to clause 8.1.5 the set of resource blocks and slots which overlaps with $R_{x,y+j\times P'_{rsvp_TX}}$ for q=1, 2, ..., $Q$ and $j$=0, 1, ..., $C_{resel}$ - 1. Here, $P'_{rsvp_RX}$ is $P_{rsvp_RX}$ converted to units of logical slots according to clau se 8.1.7, $Q = \left\lceil \frac{T_{scal}}{P_{rsvp_RX}} \right\rceil$ if $P_{rsvp_RX} < T_{scal}$ and $n' - m \leq P'_{rsvp_RX}$, where $t'^{SL}_{n'} = n$ if slot n belongs to t he set $(t'^{SL}_0, t'^{SL}_1, \ldots, t'^{SL}_{T'_{max}-1})$, otherwise slot $t'^{SL}_{n'}$ is the first slot after slot n belonging to the set $(t'^{SL}_0, t'^{SL}_1, \ldots, t'^{SL}_{T'_{max}-1})$ ; otherwise $Q$ = 1. $T_{scal}$ is set to selection window size $T_2$ converted to units of msec.

(continued)

| |
|---|
| 7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.<br>The UE shall report set $S_A$ to higher layers.<br>If a resource $r_i$ from the set ($r_0$, $r_1$, $r_2$, ...) is not a member of $S_A$, then the UE shall report re-evaluation of the resource $r_i$ to higher layers.<br>If a resource $r_i'$ from the set $(r_0', r_1', r_2', \ldots)$ meets the conditions below then the UE shall report pre-emption of the resource $r_i'$ to higher layers<br>- $r_i'$ is not a member of $S_A$, and<br>- $r_i'$ meets the conditions for exclusion in step 6, with $Th(prio_{RX}, prio_{TX})$ set to the final threshold after executin g steps 1)-7), i.e. including all necessary increments for reaching $X \cdot M_{total}$, and<br>- the associated priority $prio_{RX}$, satisfies one of the following conditions:<br>- *sl-PreemptionEnable* is provided and is equal to 'enabled' and $prio_{TX} > prio_{RX}$<br>- *sl-PreemptionEnable* is provided and is not equal to 'enabled', and $prio_{RX} < prio_{pre}$ and $prio_{TX} > pri\ O_{RX}$ |

Meanwhile, partial sensing may be supported for power saving of the UE. For example, in LTE SL or LTE V2X, the UE may perform partial sensing based on Tables 9 and 10.

[Table 9]

| |
|---|
| In sidelink transmission mode 4, when requested by higher layers in subframe n for a carrier, the UE shall determine the set of resources to be reported to higher layers for PSSCH transmission according to the steps described in this Subclause.<br>Parameters $L_{subCH}$ the number of sub-channels to be used for the PSSCH transmission in a subframe, $P_{rsvp_TX}$ the resource reservation interval, and $prio_{TX}$ the priority to be transmitted in the associated SCI format 1 by the UE are all provided by higher layers (described in [8]). $C_{resel}$ is determined according to Subclause 14.1.1.4B.<br>In sidelink transmission mode 3, when requested by higher layers in subframe n for a carrier, the UE shall determine the set of resources to be reported to higher layers in sensing measurement according to the steps described in this Subclause.<br>Parameters $L_{subCH}$, $P_{rsvp_TX}$ and $prio_{TX}$ are all provided by higher layers (described in [11]). $C_{resel}$ is determined by $C_{resel}$ =10*SL_RESOURCE_RESELECTION_COUNTER, where SL_RESOURCE_RESELECTION_COUNTER is pr ovided by higher layers [11].<br>...<br>If partial sensing is configured by higher layers then the following steps are used:<br>1) A candidate single-subframe resource for PSSCH transmission $R_{x,y}$ is defined as a set of $L_{subCH}$ contiguous sub-channels with sub-channel *x+j* in subframe $t_y^{SL}$ where $j = 0,..., L_{subCH} -1$. The UE shall determine by its implementation a set of subframes which consists of at least *Y* subframes within the time interval<br>[$n + T_1$, $n + T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$ . UE selection of $T_2$ shall fulfil the latency requirement and *Y* shall be greater than or equal to the high layer parameter *minNumCandidateSF*. The UE shall assume that any set of $L_{subCH}$ contiguous sub-channels included in the corresponding PSSCH resource pool (described in 14.1.5) within the determined set of subframes correspond to one candidate single-subframe resource. The total number of the candidate single-subframe resources is denoted by $M_{total}$ .<br>2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes. |

(continued)

3) The parameter $Th_{a,b}$ is set to the value indicated by the i-th *SL-ThresPSSCH-RSRP* field in *SL-ThresPSSCH-RSRP-List* where $i = (a - 1) * 8 + b$.

4) The set $S_A$ is initialized to the union of all the candidate single-subframe resources. The set $S_B$ is initialized to an empty set.

*5)* The UE shall exclude any candidate single-subframe resource $R_{x,y}$ from the set $S_A$ if it meets all the following conditions:

- the UE receives an SCI format 1 in subframe $t_m^{SL}$, and "Resource reservation" field and "Priority" field in the received SCI format 1 indicate the values $P_{rsvp_RX}$ and $prio_{RX}$, respectively according to Subclause 14.2.1.
- PSSCH-RSRP measurement according to the received SCI format 1 is higher than $Th_{prioTX,prioRX}$.
- the SCI format received in subframe $t_m^{SL}$ or the same SCI format 1 which is assumed to be received in subframe(s) $t_{m+q\times P_{step}\times P_{rsvp_RX}}^{SL}$ determines according to 14.1.1.4C the set of resource blocks and subframes which overlaps with $R_{x,y+j\times P'_{rsvp_TX}}$ for $q$=1, 2, ..., $Q$ and $j$=0, 1, ..., $C_{resel}$-1. Here, $Q = \frac{1}{P_{rsvp_RX}}$ if $P_{rsvp_RX} < 1$ and $y' - m \le P_{step} \times P_{rsvp_RX} + P_{step}$, where $t_{y'}^{SL}$ is the last subframe of the $Y$ subframes, and $Q$ = 1 otherwise.

6) If the number of candidate single-subframe resources remaining in the set $S_A$ is smaller than $0.2 \cdot M_{total}$, then Step 4 is repeated with $Th_{a,b}$ increased by 3 dB

[Table 10]

7) For a candidate single-subframe resource $R_{x,y}$ remaining in the set $S_A$, the metric $E_{x,y}$ is defined as the linear
average of S-RSSI measured in sub-channels $x+k$ for $k$ = 0,..., $L_{subCH}$ -1 in the monitored subframes in Step 2 that can be expressed by $t_{y-P_{step}*j}^{SL}$ for a non-negative integer $j$.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

9) When the UE is configured by upper layers to transmit using resource pools on multiple carriers, it shall ex clude a candidate single-subframe resource $R_{x,y}$ from $S_B$ if the UE does not support transmission in the can didate single-subframe resource in the carrier under the assumption that transmissions take place in other carrier (s) using the already selected resources due to its limitation in the number of simultaneous transmission carriers, its limitation in the supported carrier combinations, or interruption for RF retuning time [10].

The UE shall report set $S_B$ to higher layers.

If transmission based on random selection is configured by upper layers and when the UE is configured by upper 1 ayers to transmit using resource pools on multiple carriers, the following steps are used:

1) A candidate single-subframe resource for PSSCH transmission $R_{x,y}$ is defined as a set of $L_{subCH}$ contiguo us sub-channels with sub-channel $x+j$ in subframe $t_y^{SL}$ where $j$ = 0,..., $L_{subCH}$ -1. The UE shall assume that any set of $L_{subCH}$ contiguous sub-channels included in the corresponding PSSCH resource pool (describ ed in 14.1.5) within the time interval $[n + T_1, n + T_2]$ corresponds to one candidate single-subframe resour ce, where selections of $T_1$ and $T_2$ are up to UE implementations under $T_1 \le 4$ and $T_{2min}(prio_{TX}) \le T_2 \le 100$, if $T_{2min}(prio_{TX})$ is provided by higher layers for $prio_{TX}$, otherwise $20 \le T_2 \le 100$. UE selection of $T_2$ shall fulfil the latency requirement. The total number of the candida te single-subframe resources is denoted by $M_{total}$.

(continued)

2) The set $S_A$ is initialized to the union of all the candidate single-subframe resources. The set $S_B$ is initiali zed to an empty set.
3) The UE moves the candidate single-subframe resource $R_{x,y}$ from the set $S_A$ to $S_B$.
4) The UE shall exclude a candidate single-subframe resource $R_{x,y}$ from $S_B$ if the UE does not support tran smission in the candidate single-subframe resource in the carrier under the assumption that transmissions take place in other carrier(s) using the already selected resources due to its limitation in the number of simultane ous transmission carriers, its limitation in the supported carrier combinations, or interruption for RF retuning time [10].

The UE shall report set $S_B$ to higher layers.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

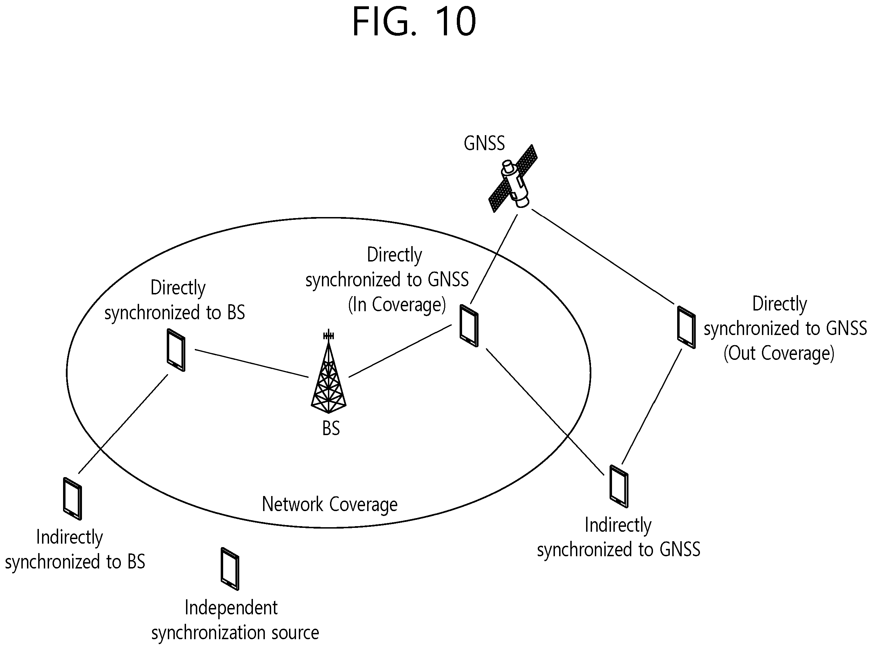

FIG. 10 shows a synchronization source or synchronization reference of V2X, based on an embodiment of the present disclosure. The embodiment of FIG. 10 may be combined with various embodiments of the present disclosure.

Referring to FIG. 10, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

An SL synchronization source may be associated/related with a synchronization priority. For example, a relation between the synchronization source and the synchronization priority may be defined as shown in Table 11 or Table 12. Table 11 or Table 12 are for exemplary purposes only, and the relation between the synchronization source and the synchronization priority may be defined in various forms.

[Table 11]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 12]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 11 or Table 12, P0 may denote a highest priority, and P6 may denote a lowest priority. In Table 11 or Table 12, the BS may include at least one of a gNB and an eNB. Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/-reception, physical sidelink feedback channel (PSFCH) transmission/reception, S-SSB transmission/reception, reference signal transmission/reception, etc.) based on the obtained synchronization.

Hereinafter, positioning will be described.

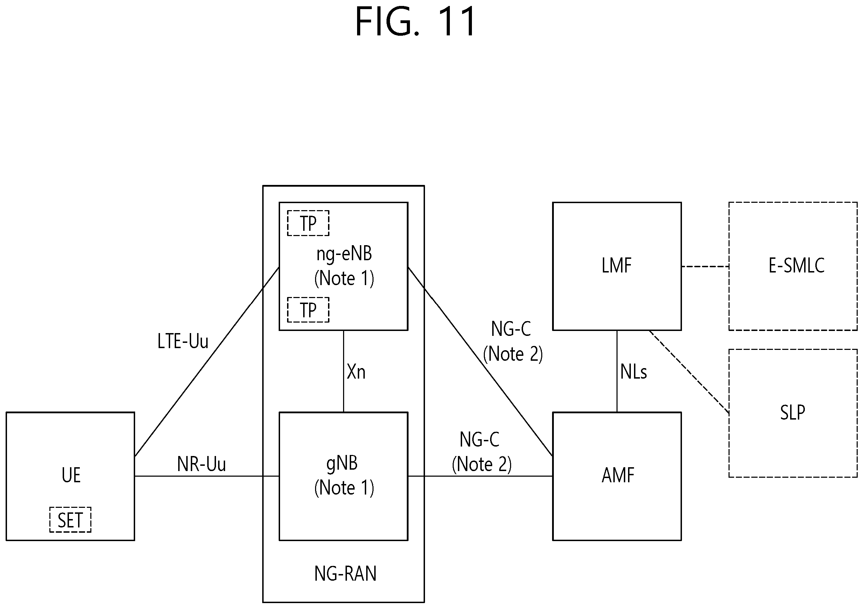

FIG. 11 shows an example of an architecture of a 5G system capable of positioning a UE having access to a next generation-radio access network (NG-RAN) or an E-UTRAN based on an embodiment of the present disclosure. The embodiment of FIG. 11may be combined with various embodiments of the present disclosure.

Referring to FIG. 11, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

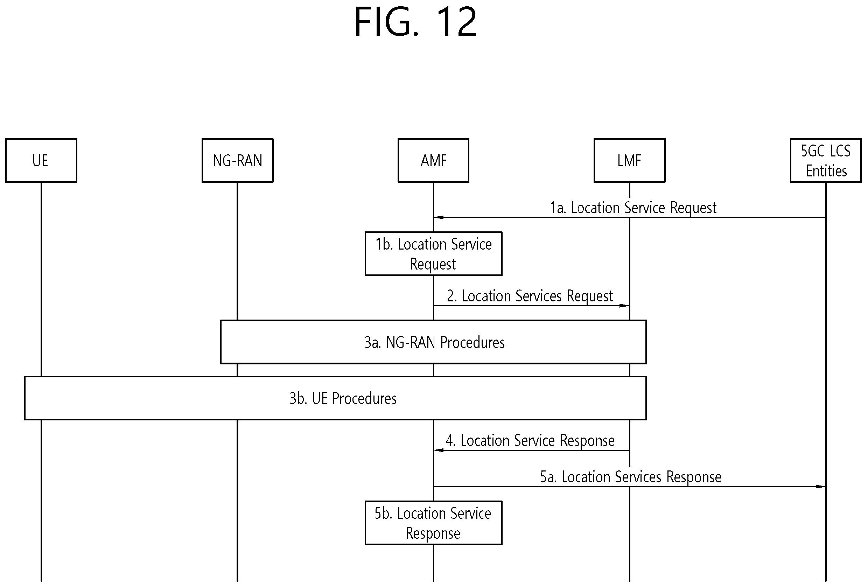

FIG. 12 shows an example of implementing a network for measuring a location of a UE based on an embodiment of the present disclosure. The embodiment of FIG. 12 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 12. That is, it may be assumed in FIG. 12 that the UE is in a connected mode. However, due to signaling and data inactivation or the like, the signaling connection may be released by NG-RAN while a positioning process is performed.

A network operation process for measuring a location of a UE will be described in detail with reference to FIG. 12. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 12 is initiated by step a1, the AMF may transfer the location service response to a SGC entity such as GMLC, and if the procedure of FIG. 12 is initiated by step 1b, the AMF may use the location service response to provide a location service related to an emergency call or the like.

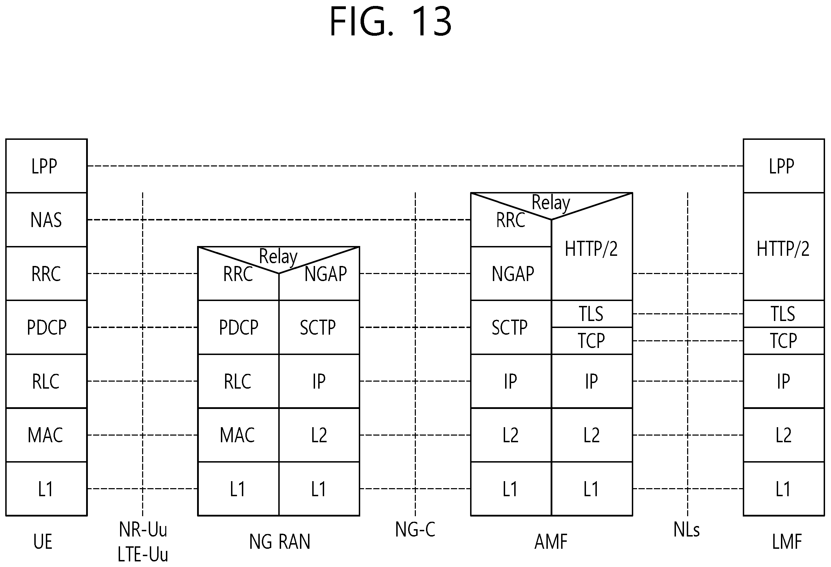

FIG. 13 shows an example of a protocol layer used to support LTE positioning protocol (LPP) message transmission between an LMF and a UE based on an embodiment of the present disclosure. The embodiment of FIG. 13 may be combined with various embodiments of the present disclosure.

An LPP PDU may be transmitted through a NAS PDU between an AMF and the UE. Referring to FIG. 13, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

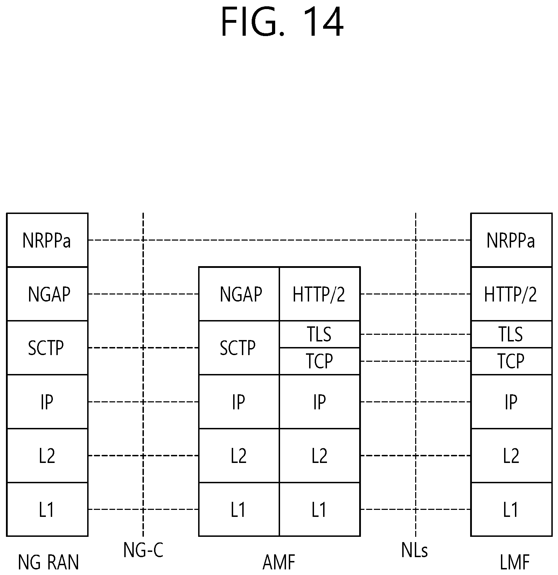

FIG. 14 shows an example of a protocol layer used to support NR positioning protocol A (NRPPa) PDU transmission between an LMF and an NG-RAN node based on an embodiment of the present disclosure. The embodiment of FIG. 14 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

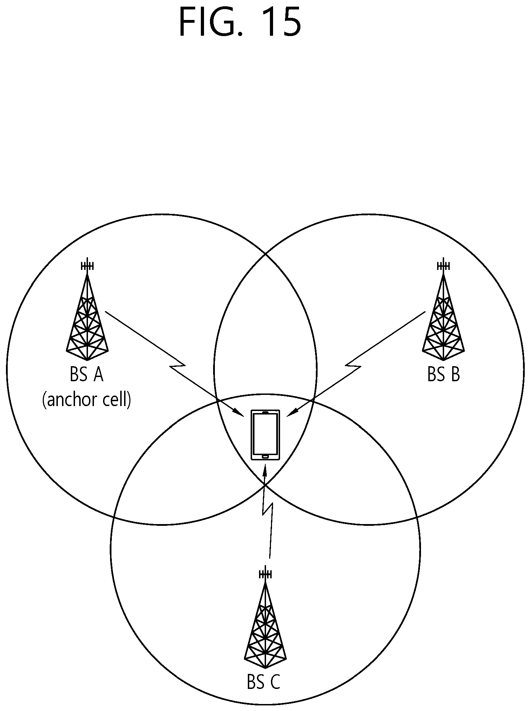

FIG. 15 is a drawing for explaining an OTDOA positioning method based on an embodiment of the present disclosure. The embodiment of FIG. 15 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1.

[Equation 1]

$$RSTDi,1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

TADV Type 1 = (ng-eNB Rx-Tx time difference)+(UE E-UTRA Rx-Tx time difference)

TADV Type 2 = ng-eNB Rx-Tx time difference

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

(4) RTT (Round Trip Time)

RTT is a positioning technology by which, even when a target entity and a server entity are not in time synchronization, a distance between the two entities can be measured. If RTT is performed with several server entities, a distance from each server entity is measured, and if a circle is drawn using the distance measured from each server entity, absolute positioning of the target entity may be performed by a point where the respective circles intersect.

A method of performing RTT between two entities is as follows. If entity #1 transmits PRS #1 at t1, entity #2 receives the RRS #1 at t2, entity #2 receives the PRS #1, entity #2 transmits PRS #2 at t3, and then entity #1 receives the PRS #2 at t4, a distance D between the two entities may obtained as follows.

D = c x {(t4-t1) - (t3-t2)}/2 (where c is the speed of light)

For RTT between a UE and a gNB, a distance between the UE and the gNB may be obtained based on the above equation using a UE Rx-Tx time difference and a gNB Rx-Tx time difference in the table 16, table 18 below.

(5) double-side RTT

Double-side RTT is a positioning technology that can measure the distance between two entities even when there is a sampling clock frequency offset between the target and server entities.

The method for performing a double-sided RTT between two entities is as follows,

Double-side RTT is widely used in ultra-wideband (UWB) positioning and may reduce the impact of clock errors.

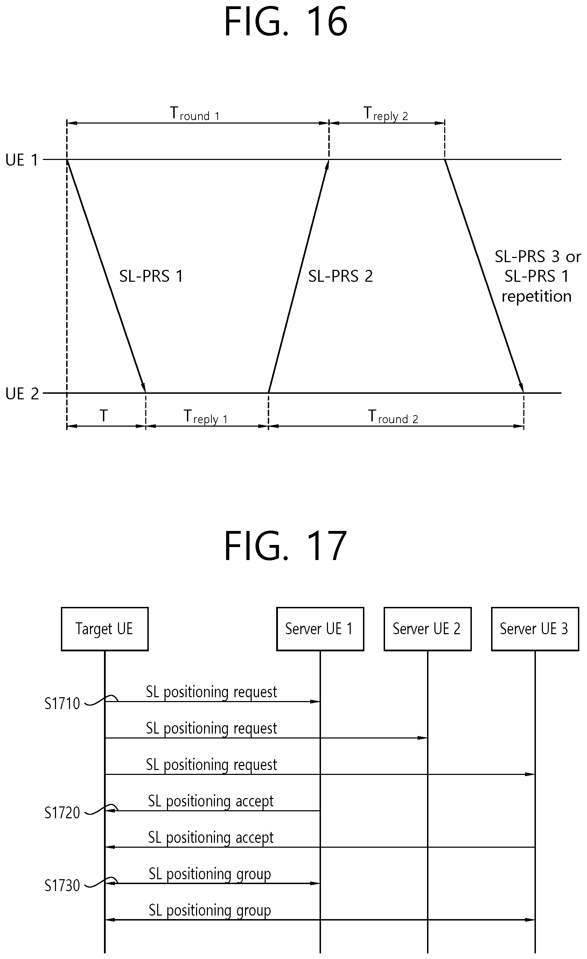

FIG. 16 shows a double-side RTT, according to one embodiment of the present disclosure. The embodiment of FIG. 16 may be combined with various embodiments of the present disclosure.

For example, the propagation delay T may be estimated from two measurement values (i.e., Tround1, Tround2, Treply1, Treply2).

For example, the propagation delay T (T^) may be estimated based on Equation 2.

[Equation 2]

$$\hat{T} = \frac{1}{2}\left(T_{round1} - T_{reply1}\right)$$

For example, the propagation delay T (T^) may be estimated based on Equation 3.

[Equation 3]

$$\hat{T} = \frac{1}{2}\left(T_{round2} - T_{reply2}\right)$$

And, $T_{round1}$*$T_{round2}$-$T_{reply1}$*$T_{reply2}$ may be obtained based on Equation 4.

[Equation 4]

$$T_{round1} \times T_{round2} - T_{reply1} \times T_{reply2}$$

$$= 4\hat{T}^2 + 2\hat{T}\left(T_{reply1} + T_{reply2}\right) = \hat{T}\left(T_{round1} + T_{round2} + T_{reply1} + T_{reply2}\right)$$

Here, Equation 4 may be the same as Equation 5.

[Equation 5]

$$T_{round1} \times T_{round2} = \left(2\hat{T} + T_{reply1}\right)\left(2\hat{T} + T_{reply2}\right)$$

$$= 4\hat{T}^2 + 2\hat{T}\left(T_{reply1} + T_{reply2}\right) + T_{reply1} \times T_{reply2}$$

Accordingly, the propagation delay T(T^) may be estimated as Equation 6.

[Equation 6]

$$\hat{T} = \frac{T_{round1} \times T_{round2} - T_{reply1} \times T_{reply2}}{(T_{round1} + T_{round2} + T_{reply1} + T_{reply2})}$$

In this case, the propagation delay estimation error due to clock error can be obtained based on Equation 7.

[Equation 7]

$$error = \hat{T} - T \approx \frac{(e_{UE1} + e_{UE2})}{2}\hat{T}$$

Here, $e_{UE1}$ and $e_{UE2}$ may be clock offsets of UE1 and UE2.

Propagation delay T(T^) may be the estimated propagation delay between UE1 and UE2.

Table 13 shows an example of a reference signal time difference (RSTD). The RSTD in Table 13 may be applied for SL positioning.

[Table 13]

| | |
|---|---|
| Definition | The relative timing difference between the E-UTRA neighbour cell j and the E-UTRA reference cell i, defined as $T_{SubframeRxjj}$ - $T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
| Applicable for | RRC_CONNECTED inter-RAT |

Table 14 shows an example of the DL PRS reference signal received power (RSRP). The DL PRS RSRP in Table 14 may be applied for SL positioning.

[Table 14]

| | |
|---|---|
| Definition | DL PRS reference signal received power (DL PRS-RSRP), is defined as the linear average over the p ower contributions (in [W]) of the resource elements that carry DL PRS reference signals configured for RSRP measurements within the considered measurement frequency bandwidth.<br>For frequency range 1, the reference point for the DL PRS-RSRP shall be the antenna connector of t he UE. For frequency range 2, DL PRS-RSRP shall be measured based on the combined signal from antenna elements corresponding to a given receiver branch. For frequency range 1 and 2, if receiver d iversity is in use by the UE, the reported DL PRS-RSRP value shall not be lower than the correspon ding DL PRS-RSRP of any of the individual receiver branches. |
| Applicable for | RRC_CONNECTED intra-frequency,<br>RRC_CONNECTED inter-frequency |

Table 15 shows an example of a DL relative signal time difference (RSTD). The DL RSTD in Table 15 may be applied for SL positioning.

[Table 15]

| | |
|---|---|
| Definition | DL reference signal time difference (DL RSTD) the positioning node *j* and the reference positioning node *i*, is defined as $T_{SubframeRxj}$ - $TS_{ub}f_{ra}$meRxi,<br>Where: |

(continued)

| | |
|---|---|
| | $T_{SubframeRxj}$ is the time when the UE receives the start of one subframe from positioning node *j.* $T_{SubframeRxi}$ is the time when the UE receives the corresponding start of one subframe from positioning node *i* that is closest in time to the subframe received from positioning node *j.* Multiple DL PRS resources can be used to determine the start of one subframe from a positioning no de. For frequency range 1, the reference point for the DL RSTD shall be the antenna connector of the U E. For frequency range 2, the reference point for the DL RSTD shall be the antenna of the UE. |
| Applicable for | RRC_CONNECTED intra-frequency, RRC_CONNECTED inter-frequency |

Table 16 shows an example of a UE Rx-Tx time difference. The UE Rx-Tx time difference in Table 16 may be applied for SL positioning.

[Table 16]

| | |
|---|---|
| Definition | The UE Rx - Tx time difference is defined as $T_{UE-RX}$ - $T_{UE-TX}$ Where: $T_{UE-RX}$ is the UE received timing of downlink subframe #*i* from a positioning node, defined by the fi rst detected path in time. $T_{UE-TX}$ is the UE transmit timing of uplink subframe #*j* that is closest in time to the subframe #i rece ived from the positioning node. Multiple DL PRS resources can be used to determine the start of one subframe of the first arrival pa th of the positioning node. For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be the Rx antenna of th e UE and the reference point for $T_{UE-TX}$ measurement shall be the Tx antenna of the UE. |
| Applicable for | RRC_CONNECTED intra-frequency, RRC_CONNECTED inter-frequency |

Table 17 shows an example of a UL Relative Time of Arrival (UL RTOA) (TUL-RTOA). The UL RTOA in Table 17 may be applied for SL positioning.

[Table 17]

| | |
|---|---|
| Definition | [The UL Relative Time of Arrival ($T_{UL-RTOA}$) is the beginning of subframe *i* containing SRS received in positioning node *j,* relative to the configurable reference time.] Multiple SRS resources for positioning can be used to determine the beginning of one subframe conta ining SRS received a positioning node. The reference point for $T_{UL-RTOA}$ shall be: - for type 1-C base station TS 38.104 [9]: the Rx antenna connector, - for type 1-O or 2-O base station TS 38.104 [9]: the Rx antenna, - for type 1-H base station TS 38.104 [9]: the Rx Transceiver Array Boundary connector. |

Table 18 shows an example of a gNB Rx-Tx time difference. The gNB Rx-Tx time difference in Table 18 may be applied for SL positioning.

[Table 18]

| | |
|---|---|
| Definition | The gNB Rx - Tx time difference is defined as $T_{gNB-RX}$ - $T_{gNB-TX}$ Where: $T_{gNB-RX}$ is the positioning node received timing of uplink subframe #*i* containing SRS associated with UE, defined by the first detected path in time. |

(continued)

| | |
|---|---|
| | $T_{gNB-TX}$ is the positioning node transmit timing of downlink subframe #*j* that is closest in time to the subframe #*i* received from the UE.<br>Multiple SRS resources for positioning can be used to determine the start of one subframe containing SRS.<br>The reference point for $T_{gNB-RX}$ shall be:<br>- for type 1-C base station TS 38.104 [9]: the Rx antenna connector,<br>- for type 1-O or 2-O base station TS 38.104 [9]: the Rx antenna,<br>- for type 1-H base station TS 38.104 [9]: the Rx Transceiver Array Boundary connector.<br>The reference point for $T_{gNB-TX}$ shall be:<br>- for type 1-C base station TS 38.104 [9]: the Tx antenna connector,<br>- for type 1-O or 2-O base station TS 38.104 [9]: the Tx antenna,<br>- for type 1-H base station TS 38.104 [9]: the Tx Transceiver Array Boundary connector. |

Table 19 shows an example of a UL Angle of Arrival (AoA). The UL AoA in Table 19 may be applied for SL positioning.

[Table 19]

| | |
|---|---|
| Definition | UL Angle of Arrival (UL AoA) is defined as the estimated azimuth angle and vertical angle of a UE with respect to a reference direction, wherein the reference direction is defined:<br>- In the global coordinate system (GCS), wherein estimated azimuth angle is measured relativ e to geographical North and is positive in a counter-clockwise direction and estimated verti cal angle is measured relative to zenith and positive to horizontal direction<br>- In the local coordinate system (LCS), wherein estimated azimuth angle is measured relative to x-axis of LCS and positive in a counter-clockwise direction and estimated vertical angle is measured relative to z-axis of LCS and positive to x-y plane direction. The bearing, down tilt and slant angles of LCS are defined according to TS 38.901 [15].<br>The UL-AoA is determined at the gNB antenna for an UL channel corresponding to this UE. |

Table 20 shows an example of the UL SRS reference signal received power (RSRP). The UL SRS RSRP in Table 20 may be applied for SL positioning.

[Table 20]

| | |
|---|---|
| Definition | UL SRS reference signal received power (UL SRS-RSRP) is defined as linear average of the power c ontributions (in [W]) of the resource elements carrying sounding reference signals (SRS). UL SRS-RS RP shall be measured over the configured resource elements within the considered measurement frequ ency bandwidth in the configured measurement time occasions.<br>For frequency range 1 and 2, UL SRS-RSRP shall be measured based on the combined signal from a ntenna elements corresponding to a given receiver branch. For frequency range 1 and 2, if receiver di versity is in use by the gNB, the reported UL SRS-RSRP value shall not be lower than the correspon ding UL SRS-RSRP of any of the individual receiver branches. |

In an embodiment(s) of the present disclosure, a positioning mode may be disclosed. For example, the positioning mode may include standalone, UE-based, or UE-assisted. For example, stand alone may mean a positioning mode that determines one's position based on GNSS without PRS (without correction of positioning error through PRS). For example, X of "X-based" and "X-assisted" can mean a node responsible for positioning calculations (and being able to provide measurements) and nodes providing measurements (and not positioning calculations), respectively. Thus, for example, the operation(s) in which measurements used in the calculation of position estimation are provided by the UE to the LMF may be described as "UE-assisted" (and may also be called "LMF-based"), whereas the operations(s) in which UE calculates its own position may be described as "UE-based".

For example, Table 21-23 is a table showing an example of PRS Assistance Data.

[Table 21]

*NR-DL-PRS-AssistanceData*

The IE *NR-DL-PRS-AssistanceData* is used by the location server to provide DL-PRS assistance data.

NOTE 1: The location server should include at least one TRP for which the SFN can be obtained by the target device, e.g. the serving TRP.

NOTE 2: The *nr-DL-PRS-ReferenceInfo* defines the "assistance data reference" TRP whose DL-PRS configuration is included in *nr-DL-PRS-AssistanceDataList.* The *nr-DL-PRS-SFNO-Offset's* and *nr-DL-PRS-expectedRSTD's* in *nr-DL-PRS-AssistanceDataList* are provided relative to the "assistance data reference" TRP.

NOTE 3: The network signals a value of zero for the *nr-DL-PRS-SFN0-Offset, nr-DL-PRS-expectedRSTD,* and *nr-DL-PRS-expectedRSTD-uncertainty* of the "assistance data reference" TRP in *nr-DL-PRS-AssistanceDataList.*

NOTE 4: For NR DL-TDOA positioning (see clause 6.5.10) the *nr-DL-PRS-ReferenceInfo* defines also the requested "RSTD reference".

For DL-PRS processing, the LPP layer may inform lower layers to start performing DL-PRS measurements and provide to lower layers the information about the location of DL-PRS, e.g. DL-PRS-PointA, DL-PRS Positioning occasion information.

[Table 22]

```
-- ASN1START

NR-DL-PRS-AssistanceData-r16 ::= SEQUENCE {
    nr-DL-PRS-ReferenceInfo-r16           DL-PRS-ID-Info-r16,
    nr-DL-PRS-AssistanceDataList-r16   SEQUENCE (SIZE (1..nrMaxFreqLayers-r16)) OF
                                                  NR-DL-PRS-AssistanceDataPerFreq-r16,
    nr-SSB-Config-r16                     SEQUENCE (SIZE (1..nrMaxTRPs-r16)) OF
                                                  NR-SSB-Config-r16 OPTIONAL,    -- Need ON
    ...,
    [[
    nr-DL-PRS-AggregationInfo-r18         NR-DL-PRS-AggregationInfo-r18       OPTIONAL     -- Need ON
    ]]
}

NR-DL-PRS-AssistanceDataPerFreq-r16 ::= SEQUENCE {
    nr-DL-PRS-PositioningFrequencyLayer-r16
                                          NR-DL-PRS-PositioningFrequencyLayer-r16,
    nr-DL-PRS-AssistanceDataPerFreq-r16 SEQUENCE (SIZE (1..nrMaxTRPsPerFreq-r16)) OF
                                                  NR-DL-PRS-AssistanceDataPerTRP-r16,
    ...
}

NR-DL-PRS-AssistanceDataPerTRP-r16 ::= SEQUENCE {
    dl-PRS-ID-r16                   INTEGER (0..255),
    nr-PhysCellID-r16               NR-PhysCellID-r16          OPTIONAL,    -- Need ON
    nr-CellGlobalID-r16             NCGI-r15                   OPTIONAL,    -- Need ON
    nr-ARFCN-r16                    ARFCN-ValueNR-r15              OPTIONAL,    -- Need ON
    nr-DL-PRS-SFN0-Offset-r16       NR-DL-PRS-SFN0-Offset-r16,
```

```
        nr-DL-PRS-ExpectedRSTD-r16              INTEGER (-3841..3841),
        nr-DL-PRS-ExpectedRSTD-Uncertainty-r16
                                                INTEGER (0..246),
        nr-DL-PRS-Info-r16                  NR-DL-PRS-Info-r16,
        ...,
        [[
            prs-OnlyTP-r16                  ENUMERATED { true }     OPTIONAL    -- Need ON
        ]],
        [[
            nr-DL-PRS-ExpectedAoD-or-AoA-r17
                                                NR-DL-PRS-ExpectedAoD-or-AoA-r17   OPTIONAL    -- Need ON
        ]]
}

NR-DL-PRS-PositioningFrequencyLayer-r16 ::= SEQUENCE {
        dl-PRS-SubcarrierSpacing-r16  ENUMERATED {kHz15, kHz30, kHz60, kHz120, ...},
        dl-PRS-ResourceBandwidth-r16        INTEGER (1..63),
        dl-PRS-StartPRB-r16                     INTEGER (0..2176),
        dl-PRS-PointA-r16                   ARFCN-ValueNR-r15,
        dl-PRS-CombSizeN-r16                ENUMERATED {n2, n4, n6, n12, ...},
        dl-PRS-CyclicPrefix-r16             ENUMERATED {normal, extended, ...},
        ...
}

NR-DL-PRS-SFN0-Offset-r16 ::= SEQUENCE {
        sfn-Offset-r16                      INTEGER (0..1023),
        integerSubframeOffset-r16           INTEGER (0..9),
        ...
}
-- ASN1STOP
```

[Table 23]

| ***NR-DL-PRS-AssistanceData* field descriptions** |
|---|
| ***nr-DL-PRS-ReferenceInfo***<br>This field specifies the IDs of the assistance data reference TRP. |
| ***nr-DL-PRS-AssistanceDataList***<br>This field specifies the DL-PRS resources for each frequency layer. |
| ***nr-SSB-Config***<br>This field specifies the SSB configuration of the TRPs. |
| ***nr-DL-PRS-PositioningFrequencyLayer***<br>This field specifies the Positioning Frequency Layer for the *nr-DL-PRS-AssistanceDataPerFreq* field. |
| ***nr-DL-PRS-AssistanceDataPerFreq***<br>This field specifies the DL-PRS Resources for the TRPs within the Positioning Frequency Layer. |

(continued)

| ***NR-DL-PRS-AssistanceData* field descriptions** |
|---|
| ***dl-PRS-ID***<br>This field is used along with a DL-PRS Resource Set ID and a DL-PRS Resource ID to uniquely identify a DL-PRS Resource, and is associated with a single TRP. |
| ***nr-PhysCellID***<br>This field specifies the physical cell identity of the TRP. When the field *prs-OnlyTP* is included, this field is not included. |
| ***nr-CellGlobalID***<br>This field specifies the NCGI, the globally unique identity of a cell in NR, as defined in TS 38.331 [35]. When the field *prs-OnlyTP* is included, this field is not included. |
| ***nr-ARFCN***<br>This field specifies the NR-ARFCN of the TRP's CD-SSB (as defined in TS 38.300 [47]) corresponding to *nr-PhysCellID.* When the field *prs-OnlyTP* is included, this field is not included. |

Unless otherwise noted, the definitions below are applicable to the following terminologies used in the present disclosure.

- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

Hereinafter, a method of transmitting a downlink signal through an unlicensed band will be described. For example, a method of transmitting a downlink signal through an unlicensed band may be applied to a method of transmitting a sidelink signal through an unlicensed band.
The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

According to CAP operation(s) performed by a base station to transmit a downlink signal through an unlicensed band, based on an embodiment of the present disclosure, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ ($N= N_{init}$), where $N_{init}$ is a random number uniformly distributed between 0 and $CW_p$. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration $T_d$ or all the slots of the additional defer duration $T_d$ are detected to be idle.
Step 6) (S170) If the channel is sensed to be idle for all the slot durations of the additional defer duration Td (Y), step 4 proceeds. Otherwise (N), step 5 proceeds.

Table 24 shows that $m_p$, a minimum contention window (CW), a maximum CW, a maximum channel occupancy time (MCOT), and an allowed CW size, which are applied to the CAP, vary depending on channel access priority classes.

[Table 24]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | *15* | 3 ms | {7,15} |
| 3 | 3 | *15* | 63 | 8 or 10 ms | {15,31,63} |
| 4 | 7 | *15* | 1023 | 8 or 10 ms | {15,31,63,127,255,511,1023} |

Referring to Table 24, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + mp consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions.

- Transmission(s) initiated by the base station including (i) a discovery burst only or
- (ii) a discovery burst multiplexed with non-unicast information, or
- Transmission(s) by the base station after a gap of 25 us from transmission(s) by the UE within a shared channel occupancy.

In the type 2A DL CAP, the base station may perform transmission immediately after the channel is sensed to be idle at least for a sensing duration $T_{short_dl}$ = 25 us. Herein, $T_{short_dl}$ includes the duration $T_f$ (=16 us) and one sensing slot duration immediately after the duration $T_f$, where the duration $T_f$ includes a sensing slot at the beginning thereof. If all sensing slots of $T_{short_dl}$ are sensed as idle, the channel is considered idle for $T_{short_dl}$.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for $T_f$ = 16 us. $T_f$ includes a sensing slot within 9 us from the end of the duration. For example, the channel may be considered to be idle within the duration T_f if the channel is sensed to be idle for a total of at least 5μs with at least 4μs of sensing occurring in the sensing slot.

The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission. The duration of the corresponding DL transmission may be at most 584μs.

According to an embodiment of the present disclosure, for example, if an SL PRS for SL positioning is transmitted in a resource pool for SL communication, the accuracy of the SL positioning may be limited by a bandwidth of the resource pool.

According to an embodiment of the present disclosure, a method for selecting an SL measurement gap to improve SL positioning accuracy, a method and operation for selecting an SL PRS transmission resource if transmitting an SL PRS through the SL measurement gap, and an apparatus for supporting the method may be proposed.

According to an embodiment of the present disclosure, for example, if SL positioning is performed in a resource pool that performs SL communication, there may be a problem that the SL positioning accuracy is limited by a bandwidth of the resource pool. For example, to solve this problem, an SL measurement gap (hereinafter MG) may be configured (in advance) to provide a bandwidth that allows the SL positioning accuracy to be satisfied. For example, the SL MG may be configured in a manner such as at least one of the following.

For example, an SL MG may be configured per SL resource pool, and may include configuration information such as at least one of the following.

- For example, MG period and MG interval length defined in units of SL logical slots
- For example, bandwidth and center frequency or starting frequency location of the channel that a UE will use in the MG

For example, one or more MGs may be configured per SL resource pool, and the configuration information may be included independently per MG.

For example, UE may select one or more SL MGs suitable for transmitting the SL PRS from among the one or more SL MGs based on the SL PRS configuration information to be transmitted, and may report to the base station or LMF an index or identification information for the selected one or more SL MGs.

For example, a base station or an LMF may activate or deactivate a specific SL MG among one or more SL MGs configured in the resource pool via an RRC or MAC CE or DCI. For example, the SL MG to be activated or deactivated by the base station or the LMF (as described above) may be one of the one or more SL MGs reported by the UE and selected by the UE.

For example, conditions for the UE to select the one or more SL MGs, or conditions for the base station/LMF to select the SL MGs that it indicates to the UE to activate or deactivate, may be at least one of the following.

- For example, an SL MG may be selected that has a bandwidth (BW) above a certain threshold that satisfies an SL positioning accuracy requirement that an SL positioning service requires.
- For example, an SL MG may be selected that includes candidate transmission resources within a time domain that are no later in time than an SL geolocation delay requirement that the SL positioning service requires.
- According to an embodiment of the present disclosure, for example, an SL MG may be selected based on a congestion level (e.g., CBR, CR) of an MG to transmit the SL PRS. For example, among candidate SL MGs for transmitting the SL PRS, an SL MG having the smallest CBR may be selected. For example, an SL MG having a CBR below a certain threshold value may be randomly selected among the candidate SLMGs for the SL PRS transmission. For example, the certain threshold may be determined based on a priority associated with the SL PRS or an associated SL positioning service. For example, the CBR threshold for the SL PRS having a lower priority value associated with the SL PRS or the associated SL positioning service may be higher than the CBR threshold for the SL PRS having a higher priority value.

For example, CBR measurement associated with the selection of an SL MG for the SL PRS transmission may be performed in at least one of the following.

- For example, CBR may be measured based on UE sensing for SL MG resources over which CCHs associated with an SL PRS is transmitted.

- For example, CBR may be measured based on UE sensing for SL MG resources over which SL PRS is transmitted.
- For example, a final CBR value may be determined based on both CBR measured based on UE sensing of the SL MG resource over which the CCH associated with the SL PRS is transmitted and CBR measured based on UE sensing of the SL MG resource over which the SL PRS is transmitted. For example, to increase the success rate of SL PRS reception, the final CBR value may be determined to be the value that is greater than or equal to the two types of CBR measurements. For example, to increase the success rate of SL PRS transmission, the final CBR value may be determined to be the smaller than or equal to the two types of CBR measurements. For example, by taking into consideration both the SL PRS transmission and reception success rates, an average value of the two types of CBR measurements may be determined as the final CBR value.

For example, it may be configured by the base station or LMF to the UE, or it may be determined based on SL PRS configuration information that is pre-configured to the UE.

According to an embodiment of the present disclosure, for example, an SL MG including an SL PRS transport resource according to the SL PRS configuration information may be selected.

For example, an SL MG including an SL logical slot that satisfies an SL PRS bandwidth and/or comb size and/or the number of SL PRS symbols according to the SL PRS configuration information may be selected.

According to an embodiment of the present disclosure, for example, the UE may report available (TX) BWP and/or (TX) resource pool information to a base station or an LMF to enable the base station or the LMF to select a specific SL MG from the reported (TX) BWP and/or (TX) resource pool.

For example, if the base station allocates SL PRS resources for the UE to transmit, the UE may determine which MGs to transmit SL PRS to, in at least one of the following.

For example, the SL MG corresponding to the earliest SL MG index in time from the time the base station receives a DCI indicating the SL MG index to activate, or from the time the UE receives an RRC, or from the time the UE reports to the base station a confirmation message confirming the reception of the RRC, may be determined as an SL MG to transmit SL PRS, and/or the start time of the SL MG may be determined as a reference point associated with the determination of the SL PRS transmission resource.

For example, from the reference point, based on the (pre-) configured SL PRS resource set or SL PRS resource configuration information, the earliest SL logical slot in time after an offset associated with the SL PRS resource set and/or an offset associated with the SL PRS resource defined as an SL logical slot in the SL MG may be selected as the slot to which the first SL PRS in the SL MG is transmitted.

According to various embodiments of the present disclosure, if an SL measurement gap is used to improve SL positioning accuracy, a method for selecting the measurement gap according to channel conditions and UE operation conditions, and a method for efficiently selecting SL PRS transmission resources in the measurement gap may be proposed.

According to an embodiment of the present disclosure, for example, to improve SL positioning accuracy, it may be necessary to configure a measurement gap in the resource pool for SL communications and to define a frequency resource during said measurement gap.

According to an embodiment of the present disclosure, if a measurement gap is used in a resource pool for SL communications to improve SL positioning accuracy, a method and an operation to configure an SL positioning frequency layer associated with the measurement gap, and an apparatus to support the same, may be proposed.

According to an embodiment of the present disclosure, for example, If a UE, while operating in resource pools for SL communication, is triggered to select an SL PRS transmission resource for SL positioning, the UE may select and transmit an SL PRS transmission resource based on a configuration of an SL positioning frequency layer (SL PFL) in an SL measurement gap (SL MG) that may provide a wider bandwidth than the resource pools. For example, the SL MG may be defined (in advance) for each of the resource pools, and the SL PFL may be configured (in advance) independently of the resource pools and the MG. For example, an associated SL PFL may be configured (in advance) per SL MG.

For example, if one or more SL MGs are configured for each of the resource pools, and an SL PRS configuration allowed for each of the SL MGs (and/or associated SL PFLs) is configured (in advance), the UE may, based on an SL positioning requirement, transmit SL PRS by selecting an SL MG (and/or SL PFL) that allows an SL PRS configuration that satisfies a requirement such as SL positioning accuracy and positioning delay and the like. For example, as described above, the selected SL MG index (and/or SL PFL index) may be transmitted to a base station or an LMF or other UEs participating in the SL positioning operation.

For example, SL PRS is transmitted by using the (pre-) configured SL MG (and/or SL PFL) (as described above), for example, since an SL PRS transmission resource is not selected in dynamic or on-demand form, SL positioning latency issues may occur, for example, if a pre-configured resource is re-selected, it may not satisfy PDB, for example, SL MG (and/or SL PFL) information between out of coverage (OOC) UE and in coverage (INC) UE may not be same. for example, because an SL PRS resource is reserving a channel resource unnecessarily, resource utilization may not be optimized in terms of system performance. for example, (to address these issues) an SL MG and/or an SL PFL for the SL positioning may be configured (in the form of an on-demand) based on a request of a UE in at least one of the following.

- For example, if a base station or an LMF allocates an SL PRS resource, based on a time of receipt and confirmation of an RRC or MAC CE or DCI indicating the SL PRS resource, a periodic or dynamic SL MG may be generated that includes a starting slot that is the earliest SL logical slot in time after a (preset) offset or an offset indicated by the RRC or MAC CE or DCI.
- For example, based on sensing operation of the UE, a periodic or dynamic SL MG may be generated to include time and frequency intervals where the number of SL PRS candidate transmission resources for which RSRP measurements associated with SL PRS candidate transmission resources are below a certain threshold is above a certain threshold.
- For example, when operating SL DRX, a periodic or dynamic SL MG may be generated to include one or more SL PRS candidate transmission resources for which RSRP measurements associated with SL PRS candidate transmission resources are below a certain threshold during the current and/or future on duration and/or active time of the RX UE.
- For example, in the unlicensed band, when operating SL positioning, a dynamic SL MG may be generated in order that the number of SL PRS candidate transmission resources capable of SL PRS transmission based on short-term listen-before-talk (LBT) (e.g., type2-LBT) within a channel occupancy time (COT) shared by a base station or other UEs (participating in the SL positioning) is above a certain threshold.
- For example, an SL MG may be generated to include SL PRS candidate transmission resources for which CBR measurements are below a certain threshold

According to various embodiments of the present disclosure, if a measurement gap is used within a resource pool for SL communications to improve SL positioning accuracy, a method to configure an SL positioning frequency layer associated with the measurement gap taking into account SL DRX and unlicensed band operation may be proposed.

According to an embodiment of the present disclosure, for example, in order to perform SL positioning, it is necessary to preliminarily explore whether there are UEs that are willing to participate in SL positioning as S-UEs in the neighboring area.

According to an embodiment of the present disclosure, a method and operation for performing SL positioning, based on a process for discovering an S-UE through a UE discovery process, and an apparatus supporting the same, may be proposed.

According to an embodiment of the present disclosure, for example, if a base station or an LMF initiates SL positioning, the SL positioning may be performed in at least one of the following.

- For example, if a base station or LMF requests SL positioning from a T-UE, A T-UE may form an SL positioning group and/or may perform a SL positioning process in at least one of the following.
- For example, the T-UE may transmit a direct communication request (DCR) message in the form of a broadcast/groupcast message to neighboring UEs (e.g., positioning request process).
- For example, the DCR message within the message may include an ID indicating that the DCR message is an SL positioning service
- For example, the ID may be an ID associated with the Application
- For example, the ID may be a L1/L2 destination ID, which indicates that the L1/L2 destination ID is a positioning service, or may be a source ID of the T-UE
- For example, the ID may also indicate a SL positioning method (e.g., absolute/relative positioning, TDOA/RTT/Angle-based positioning, UE-based/UE-assisted positioning, etc.)
- For example, the ID may be a group ID for Groupcast-based positioning
- For example, the T-UE may receive a direct communication accept (DCA) message associated with the DCR and/or the T-UE may form a SL positioning group with UEs that have transmitted direct communication accept (DCA) messages associated with the DCR (positioning acceptance process).
- For example, the T-UE may initiate the SL positioning process to each UE via (established via DCA message) PC5 connection (e.g. PCS-RRC, PC5-unicast link).
- For example, capability request message and response message associated with SL positioning may be exchanged between a T-UE and a S-UE within the SL positioning group.
- For example, in case of UEs that were previously performing Groupcast, because a UE group may have already been formed per UE capability, UE capability exchange associated with SL positioning may not be performed
- For example, SL positioning assistance data request message and response message associated with SL positioning may be exchanged between a T-UE and a S-UE within the SL positioning group in at least one of the following.
- SL positioning mode (UE-assited/based)
- SL positioning form (absolute/relative)

- SL positioning method (SL TDOA/RTT/Angle/UE-ID)
- SL PRS configuration information (e.g., SL PRS resource set/resource ID, SL PRS comb size, #symbols, SL PRS RE offset)
- For example, a muting pattern may also be included, where the muting pattern may also be used to prevent resource conflicts between UEs, for example, if the channel congestion level is high.
- For example, if the T-UE and the S-UE are connected to different base stations, the S-UE may report, to a base station that has established an RRC connection with the S-UE itself, SL positioning assistance data transferred from the T-S-UE.
- For example, the S-UE may transmit information for TX resource pool used by the S-UE itself to the T-UE upon response
- For example, measurements associated with required SL positioning by transmitting and receiving SL PRS may be performed within the SL positioning group.
- For example, if the S-UE performed a measurement, the T-UE may perform a measurement result request, and the SUE may transfer a measurement result to the T-UE through a response.
- For example, a base station or an LMF may request T-UE to report a SL measurement result (or a positioning result) via RRC/MAC CE/DCI.
- For example, the T-UE may report the SL measurement result (or the positioning result) within a certain threshold to the base station or the LMF after a time of the request to the report the SL measurement results (e.g., UE-assisted).
- For example, the certain threshold may be configured as UE common per resource pool, or the certain threshold may be individually signaled to UEs via RRC/MAC CE/DCI that requests to report the SL measurement result.
- For example, whether a UE reports a measurement result or a positioning result may be distinguished in at least one of the following.
- For example, it may be implicitly determined according to a SL positioning method determined by an upper layer.
- For example, T-UE may report a measurement result if indicated/determined to perform UE-assisted SL positioning, or T-UE may report a positioning result if indicated/determined to perform UE-based SL positioning
- For example, via RRC/MAC CE/DCI that requests to report the SL measurement result or positioning result, the request of SL measurement result (or the positioning result) may be indicated by distinguishing it as 1 bit signaling
- For example, if a base station or an LMF requests SL positioning of a T-UE to a neighboring UE of the T-UE (e.g. if the T-UE is an out-of-coverage (OOC) UE), the requested UE may detect if there are any T-UEs in its neighboring area.
- For example, if the T-UE is detected via Relay discovery or DCR/DCA, etc., the requested UE may indicate to the T-UE to form an SL positioning group and to perform the SL positioning process.
- For example, the requested UE may initiate to form of an SL positioning group including the T-UE, and may perform an SL positioning process based on the formed SL positioning group.
- For example, if performing an SL TDOA, S-UEs may report a SL PRS-based measurement result transmitted by the T-UE to the requested UE, or, for example, the T-UE may report a SL PRS-based measurement result transmitted by S-UEs to the requested UE
- For example, according to the method of reporting the measurement result or reporting a positioning result, the requested UE may report the result to the base station or LMF within a certain threshold time relative to a time of the being requested.
- For example, if the requested UE has UE-to-network (U2N) relay capability and the requested UE has established a U2N relay with the T-UE, the requested UE may be a UE that is not in the SL positioning group
- For example, if a UE initiates SL positioning to estimate its own location or another UE's location, SL positioning may be performed in at least one of the following.
- For example, if the T-UE initiates the SL positioning, the T-UE may transmit a direct communication request (DCR) message to neighboring UEs in the form of a broadcast/groupcast message (e.g., positioning request process).
- For example, the T-UE may receive a direct communication accept (DCA) message associated with the DCR, and/or the T-UE may form an SL positioning group with UEs that have transmitted the DCA message (positioning accept process).
- For example, the T-UE may initiate the SL positioning process to each UE via (established via DCA message) PC5 connection (e.g. PCS-RRC, PC5-unicast link).
- For example, a measurement associated with a required SL positioning may be performed by transmitting and receiving SL PRS within the SL positioning group.
- For example, in case of UE-based SL positioning, the T-UE may perform positioning and may terminate.
- For example, in case of UE-assisted SL positioning, the T-UE may request positioning calculation to a base station or an LMF, and/or the T-UE may transmit a PUCCH/PUSCH indicating a request to the base station to calculate a T-UE's location without performing an existing LPP procedure.
- For example, for low latency for the request of the SL positioning calculation, a special SR ID associated with the request of the SL positioning calculation may be allocated upon scheduling request (SR)

- For example, PUCCH/PUSCH resources may be allocated to the base station within a time interval within a certain threshold from a time the base station receives the SR from the T-UE, and/or the T-UE may report a SL measurement result via PUCCH/PUSCH.
- For example, the base station or the LMF may calculate the T-UE's location based on the reported SL measurement result, and/or may feedback the result of the positioning calculation to the T-UE
- For example, a measurement report reporting a measurement associated with an SL PRS for SL positioning between UEs may include whether the measurement is measured by a target UE or measured by an anchor UE that participates in the SL positioning and performs an operation to transmit or receive the SL PRS. For example, in the case of performing an SL-TDOA, based on the reporting of the measurement (as described above), an entity estimating target UE's location may determine whether the measurement is a measurement measured based on a PRS that the target UE transmitted to one or more server UEs or a measurement measured based on a PRS that the one or more server UEs transmitted to the target UE.

According to various embodiments of the present disclosure, a process and method of SL positioning, such as UE discovery, forming an SL positioning group, transmitting and receiving SL PRS, and reporting an SL measurement result, may be proposed to perform SL positioning through a UE discovery process.

FIG. 17 is a drawing to explain a method for performing wireless communications associated with SL positioning, based on an embodiment of the present disclosure. The embodiment of FIG. 17 may be combined with various embodiments of the present disclosure.

Referring to FIG. 17, according to an embodiment of the present disclosure, for example, SL positioning may be triggered by a UE/gNB/LMF or the like. For example, the SL positioning group may be formed by a UE (UE-controlled). For example, the target UE may transmit a request information requesting to participate in SL positioning to the server UE. For example, the server UE may transmit accept information to the target UE accepting to participate in the SL positioning (if it determines that it is available to support the positioning of the target UE by considering its capabilities). For example, based on the accept information for the SL positioning, an SL positioning group between the target UE and the server UE(s) may be formed (established).

For example, the data communication between the server UE and the target UE with which the SL positioning group is formed may be performed separately. For example, a procedure for establishing a PC5 link between the server UE and the target UE may be performed separately. In particular, for example, vehicle-to-everything (V2X) data communication may be performed together with SL positioning. Thus, for example, a procedure in which an identity of the server UE/target UE (e.g., an identity mapped with a data service) is exchanged to establish a link for data communication between the server UE and the target UE may be performed separately. Therefore, since a procedure for forming an SL positioning group may not be linked with a procedure for V2X data communication, the efficiency and low-latency of positioning/communication may be reduced.

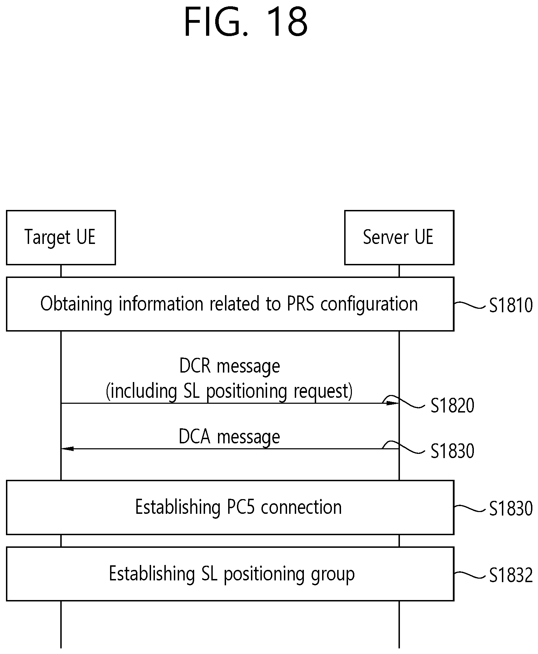

FIG. 18 is a drawing to explain a procedure for performing wireless communications associated with SL positioning, based on an embodiment of the present disclosure. The embodiment of FIG. 18 may be combined with various embodiments of the present disclosure.

Referring to FIG. 18, according to an embodiment of the present disclosure, for example, the target UE and the server UE may obtain information related to PRS configuration. For example, the target UE may trigger SL positioning. For example, an SL positioning group may be formed by the UE (UE-controlled).

For example, the server UE may determine a (default) destination ID for the establishment of a PCS-connection (e.g., PC5-RRC, PC5-unicast link). For example, the destination ID may be mapped to a V2X service type. For example, the V2X service type may be a type for a V2X service, which may be identified by an intelligent transport system (ITS)-application identifier (AID), a provider service identifier (PSDI), or an application identifier (AID). For example, V2X services (e.g., ITS services) may include public transport, emergency warning, parking management, automatic vehicle identification, cruise-assist-highway-system, vehicle-to-vehicle (V2V) safety and awareness, co-operative awareness (CA), decentralized environmental notification (DEN), etc.

For example, the target UE may transmit a direct communication message (DCR) message for initiating the establishment of a PCS- connection (for a (V2X) service) to the server UE(s). For example, the DCR message may include information requesting to participate in a SL positioning (group). For example, the DCR message may include information indicating services for SL positioning (e.g., absolute SL positioning, relative SL positioning, quality of service (QoS)/error of SL positioning, etc.). For example, the DCR message may include information indicating a method of SL positioning (e.g., TDOA, RTT, AoA, double-side RTT, etc.). For example, the DCR message may include information indicating the mode of SL positioning (e.g., UE-assisted, UE-based, standalone, etc.).

For example, the server UE(s) may transmit a DCA message to the target UE to establish a PCS-connection (for (V2X) services). For example, the DCA message may be associated with a DCR message.

For example, a PC5-association (with respect to a V2X service) may be established based on a DCA message. For example, the DCA message may include information for accepting to participate in the SL positioning (group). For example, the SL positioning group may be established (simultaneously with the PCS- connection, or before the PCS-connection, or after the PC5- connection) based on the DCA message.

Therefore, for example, data communication between the server UE and the target UE with which the SL positioning group is formed may be performed together. For example, a procedure for establishing a PC5 link between the server UE and the target UE may be performed together. In particular, for example, if vehicle-to-everything (V2X) data communication is performed together with SL positioning, a procedure in which an identity of the server UE/target UE (e.g., an identity mapped with a data service) is exchanged to establish a link for data communication between the server UE and the target UE may be performed together. Therefore, by associating the procedure for forming the SL positioning group with the procedure for V2X data communication, the efficiency and low-latency of positioning/communication may be increased.

For example, a parameter value that is related to the application or non-application of the aforementioned rule and/or that is related to the proposed method/rule of the present disclosure may be configured/allowed specifically to (or differently or independently from) a service type. For example, a parameter value that is related to the application or non-application of the aforementioned rule and/or that is related to the proposed method/rule of the present disclosure may be configured/allowed specifically to (or differently or independently from) (LCH or service) priority. For example, a parameter value that is related to the application or non-application of the aforementioned rule and/or that is related to the proposed method/rule of the present disclosure may be configured/allowed specifically to (or differently or independently from) QoS requirements (e.g., latency, reliability, minimum communication range). For example, a parameter value that is related to the application or non-application of the aforementioned rule and/or that is related to the proposed method/rule of the present disclosure may be configured/allowed specifically to (or differently or independently from) PQI parameters. For example, a parameter value that is related to the application or non-application of the aforementioned rule and/or that is related to the proposed method/rule of the present disclosure may be configured/allowed specifically to (or differently or independently from) HARQ feedback ENABLED LCH/MAC PDU (transmission). For example, a parameter value that is related to the application or non-application of the aforementioned rule and/or that is related to the proposed method/rule of the present disclosure may be configured/allowed specifically to (or differently or independently from) HARQ feedback DISABLED LCH/MAC PDU (transmission). For example, a parameter value that is related to the application or non-application of the aforementioned rule and/or that is related to the proposed method/rule of the present disclosure may be configured/allowed specifically to (or differently or independently from) a CBR measurement value of a resource pool. For example, a parameter value that is related to the application or non-application of the aforementioned rule and/or that is related to the proposed method/rule of the present disclosure may be configured/allowed specifically to (or differently or independently from) an SL cast type (e.g., unicast, groupcast, broadcast). For example, a parameter value that is related to the application or non-application of the aforementioned rule and/or that is related to the proposed method/rule of the present disclosure may be configured/allowed specifically to (or differently or independently from) an SL groupcast HARQ feedback option (e.g., NACK only feedback, ACK/NACK feedback, TX-RX range-based NACK only feedback). For example, a parameter value that is related to the application or non-application of the aforementioned rule and/or that is related to the proposed method/rule of the present disclosure may be configured/allowed specifically to (or differently or independently from) SL mode 1 CG type (e.g., SL CG type 1 or SL CG type 2). For example, a parameter value that is related to the application or non-application of the aforementioned rule and/or that is related to the proposed method/rule of the present disclosure may be configured/allowed specifically to (or differently or independently from) SL mode type (e.g., mode 1 or mode 2). For example, a parameter value that is related to the application or non-application of the aforementioned rule and/or that is related to the proposed method/rule of the present disclosure may be configured/allowed specifically to (or differently or independently from) a resource pool. For example, a parameter value that is related to the application or non-application of the aforementioned rule and/or that is related to the proposed method/rule of the present disclosure may be configured/allowed specifically to (or differently or independently from) whether or not the resource pool is configured of PSFCH resource. For example, a parameter value that is related to the application or non-application of the aforementioned rule and/or that is related to the proposed method/rule of the present disclosure may be configured/allowed specifically to (or differently or independently from) a source (L2) ID. For example, a parameter value that is related to the application or non-application of the aforementioned rule and/or that is related to the proposed method/rule of the present disclosure may be configured/allowed specifically to (or differently or independently from) a destination (L2) ID. For example, a parameter value that is related to the application or non-application of the aforementioned rule and/or that is related to the proposed method/rule of the present disclosure may be configured/allowed specifically to (or differently or independently from) a PC5 RRC connection link. For example, a parameter value that is related to the application or non-application of the aforementioned rule and/or that is related to the proposed method/rule of the present disclosure may be configured/allowed specifically to (or differently or independently from) an SL link. For example, a parameter value that is related to the application or non-application of the aforementioned rule and/or that is related to the proposed method/rule of the present disclosure may be configured/allowed specifically to (or differently or independently from) a connection status (with a base station) (e.g., RRC CONNECTED state, IDLE state, INACTIVE state). For example, a parameter value that is related to the application or non-application of the aforementioned rule and/or that is related to the proposed method/rule of the present disclosure may be configured/allowed specifically to (or differently or independently from) an SL HARQ process (ID). For example, a parameter value that is related to the application or non-application of the aforementioned rule and/or that is related to the proposed method/rule of the present disclosure may be configured/allowed specifically to (or differently or independently from) a performance or non-performance of an SL DRX operation (of the TX UE or RX UE). For example, a parameter value that is related to the application or non-application of the aforementioned rule and/or that is related to the proposed method/rule of the present disclosure may be configured/allowed specifically to (or differently or independently from) whether or not the (TX or RX) UE is a power saving UE. For example, a parameter value that is related to the application or non-application of the aforementioned rule and/or that is related to the proposed method/rule of the present disclosure may be configured/allowed specifically to (or differently or independently from) a case where PSFCH TX and PSFCH RX (and/or a plurality of PSFCH TXs (exceeding the UE capability)) overlap (in the viewpoint of a specific UE). For example, a parameter value that is related to the application or non-application of the aforementioned rule and/or that is related to the proposed method/rule of the present disclosure may be configured/allowed specifically to (or differently or independently from) a case where an RX UE has actually received PSCCH (and/or PSSCH) (re-)transmission (successfully) from a TX UE.

For example, in the present disclosure, the wording for configuration (or designation) may be extendedly interpreted as a form of informing (or notifying), by a base station, to a UE through a pre-defined (physical layer or higher layer) channel/ signal (e.g., SIB, RRC, MAC CE) (and/or a form being provided through a pre-configuration and/or a form of informing (or notifying), by the UE, to another UE through a pre-defined (physical layer or higher layer) channel/ signal (e.g., SL MAC CE, PC5 RRC)).

For example, in the present disclosure, the wording for PSFCH may be extendedly interpreted as (NR or LTE) PSSCH (and/or (NR or LTE) PSCCH) (and/or (NR or LTE) SL SSB (and/or UL channel/signal)). Additionally, the proposed method of the present disclosure may be extendedly used by being inter-combined (to a new type of method).

For example, in the present disclosure, a specific threshold value may be pre-defined or may mean a threshold value that is (pre-)configured by a network or base station or a higher layer (including an application layer) of a UE. For example, in the present disclosure, a specific configuration value may be pre-defined or may mean a value that is (pre-) configured by a network or base station or a higher layer (including an application layer) of a UE. For example, an operation that is configured by the network/base station may mean an operation that is (pre-)configured by the base station to the UE via higher layer signaling, or that is configured/signaled by the base station to the UE through a MAC CE, or that is signaled by the base station to the UE through DCI.

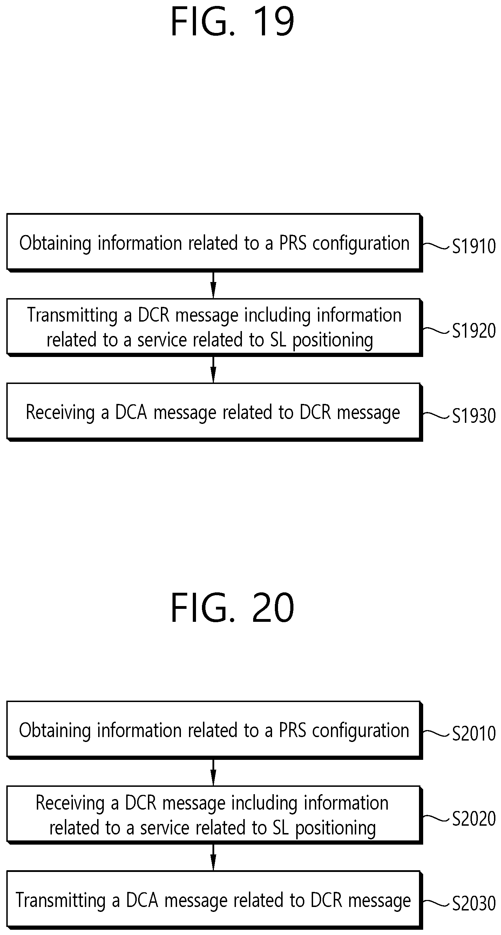

FIG. 19 shows a method for performing wireless communication by a first device, based on an embodiment of the present disclosure. The method of FIG. 19 may be combined with various embodiments of the present disclosure.

Referring to FIG. 19, according to an embodiment of the present disclosure, in step S1910, for example, the first device may obtain information related to a positioning reference signal (PRS) configuration. For example, the information related to the PRS configuration may include at least one of information related to an ID of a PRS resource, information related to an ID of a PRS sequence, information related to a starting slot of the PRS resource, or information related to a starting symbol of the PRS resource. In step S1920, for example, the first device may transmit a direct communication request (DCR) message including information related to a service related to sidelink (SL) positioning. In step S1930, for example, the first device may receive a direct communication accept (DCA) message related to the DCR message.

Additionally or alternatively, the information related to the service may include information for requesting participation in the service related to the SL positioning.

Additionally or alternatively, the information related to the service may include information representing the service related to the SL positioning.

Additionally or alternatively, the information related to the service may include a destination ID mapping to the service related to the SL positioning.

Additionally or alternatively, the information related to the service may include information related to a method of the SL positioning.

Additionally or alternatively, the information related to the service may include information related to a mode related to the SL positioning.

Additionally or alternatively, the first device may establish, based on that the DCA message is received from a second device, a PC5 connection with the second device.

Additionally or alternatively, the first device may transmit a request message for requesting assistant data for the SL positioning.

Additionally or alternatively, the request message may include the information related to the PRS configuration.

Additionally or alternatively, the first device may receive, from the second device, assistant data for the SL positioning.

Additionally or alternatively, the assistant data may include information for a set of resources configured for the second device.

Additionally or alternatively, the first device may receive, from a third device, request information requesting a positioning report related to the SL position or a measurement report related to the SL position.

Additionally or alternatively, the first device may transmit, to the third device, the positioning report or the measurement report.

Additionally or alternatively, the measurement report may include entity information related to measurement related to the SL position.

Additionally or alternatively, the first device may transmit, to a base station or a location management function (LMF), request information for calculating a location of the first device via a physical uplink control channel (PUCCH) or a physical uplink shared channel (PUSCH).

Additionally or alternatively, the first device may receive, from the base station or the LMF, information related to the location of the first device.

Additionally or alternatively, the first device may transmit, to a third device, a scheduling request (SR) for requesting a resource for the PUCCH or the PUSCH.

Additionally or alternatively, the SR may include an ID related to the request information.

The proposed method may be adapted to the device according to various embodiments of the present disclosure. First, the memory (104) of the first device (100), based on being executed by the processor (102), may have the instructions to cause the first device (100) (for example, the processor (102), the transceiver (106)) to perform operations. For example, the operations may include, by the first device (100) (for example, the processor (102), the transceiver (106)): obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, the first device performing wireless communication may be provided. The first device may comprise at least one transceiver; at least one processor; and at least one memory connected to the at least one processor and storing instructions that, based on being executed by the at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, the apparatus configured for control the first device may be provided. The apparatus may comprise at least one processor; and at least one memory connected to the at least one processor and storing instructions that, based on being executed by the at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

According to an embodiment, a non-transitory computer-readable storage medium storing instructions may be provided. The instructions that, based on being executed by at least one processor, cause the first device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; transmitting a direct communication request (DCR) message including information related to a service related to sidelink (SL) positioning; and receiving a direct communication accept (DCA) message related to the DCR message.

FIG. 20 shows a method for performing wireless communication by a second device, based on an embodiment of the present disclosure. The method of FIG. 20 may be combined with various embodiments of the present disclosure.

Referring to FIG. 20, according to an embodiment of the present disclosure, in step S2010, for example, the second device may obtain information related to a positioning reference signal (PRS) configuration. For example, the information related to the PRS configuration may include at least one of information related to an ID of a PRS resource, information related to an ID of a PRS sequence, information related to a starting slot of the PRS resource, or information related to a starting symbol of the PRS resource. In step S2020, for example, the second device may receive a direct communication request (DCR) message including information related to a service related to sidelink (SL) positioning. In step S2030, for example, the second device may transmit a direct communication accept (DCA) message related to the DCR message.

For example, the information related to the service may include information for requesting participation in the service related to the SL positioning.

For example, the information related to the service may include information representing the service related to the SL positioning.

For example, the information related to the service may include a destination ID mapping to the service related to the SL positioning.

For example, the information related to the service may include information related to a method of the SL positioning.

For example, the information related to the service may include information related to a mode related to the SL positioning.

For example, the second device may establish, based on that the DCA message is transmitted to a first device, a PC5 connection with the first device.

For example, a request message for requesting assistant data for the SL positioning may be received.

For example, the request message may include the information related to the PRS configuration.

For example, the second device may transmit, to the first device, assistant data for the SL positioning.

For example, the assistant data may include information for a set of resources configured for the second device.

For example, request information requesting a positioning report related to the SL position or a measurement report related to the SL position may be received from a third device.

For example, the positioning report or the measurement report may be transmitted to the third device.

For example, the measurement report may include entity information related to measurement related to the SL position.

For example, request information for calculating a location of the first device via a physical uplink control channel (PUCCH) or a physical uplink shared channel (PUSCH) may be transmitted to a base station or a location management function (LMF),.

For example, information related to the location of the first device may be received from the base station or the LMF.

For example, a scheduling request (SR) for requesting a resource for the PUCCH or the PUSCH may be transmitted to a third device.

For example, the SR may include an ID related to the request information.

The proposed method may be adapted to the device according to various embodiments of the present disclosure. First, the memory (204) of the second device (200), based on being executed by the processor (202), may have the instructions to cause the second device (200) (for example, the processor (202), the transceiver (206)) to perform operations. For example, the operations may include, by the second device (200) (for example, the processor (202), the transceiver (206)): obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

According to an embodiment, the second device performing wireless communication may be provided. The second device may comprise at least one transceiver; at least one processor; and at least one memory connected to the at least one processor and storing instructions that, based on being executed by the at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

According to an embodiment, the apparatus configured for control the second device may be provided. The apparatus may comprise at least one processor; and at least one memory connected to the at least one processor and storing instructions that, based on being executed by the at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

According to an embodiment, a non-transitory computer-readable storage medium storing instructions may be provided. The instructions that, based on being executed by at least one processor, cause the second device to perform operations. For example, the operations comprising: obtaining information related to a positioning reference signal (PRS) configuration, wherein the information related to the PRS configuration includes at least one of information related to an ID of a PRS resource, information related to an ID of a PRS sequence, information related to a starting slot of the PRS resource, or information related to a starting symbol of the PRS resource; receiving a direct communication request (DCR) message including information related to a service related to sidelink (SL) positioning; and transmitting a direct communication accept (DCA) message related to the DCR message.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

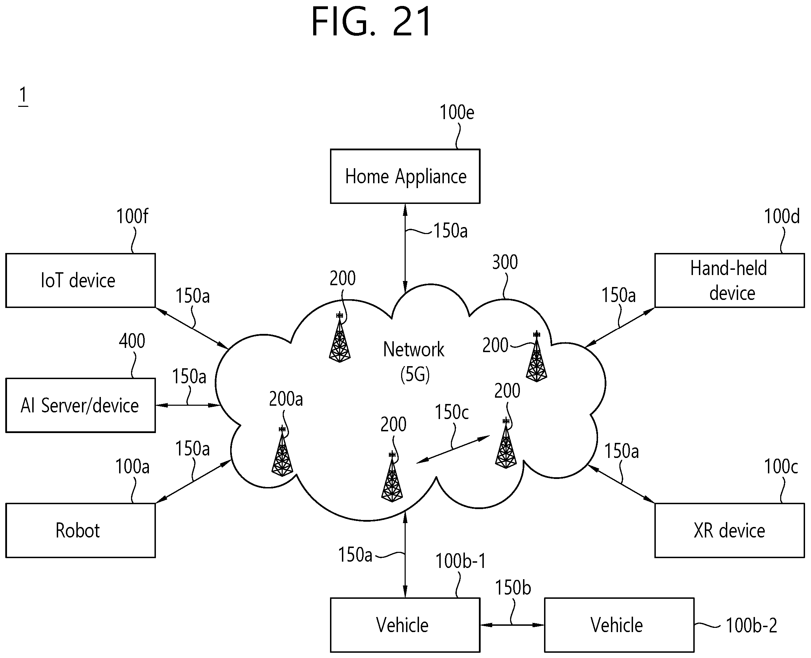

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or AV(Aerial Vehicle)(e.g., AAM(Advanced Air Mobility). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

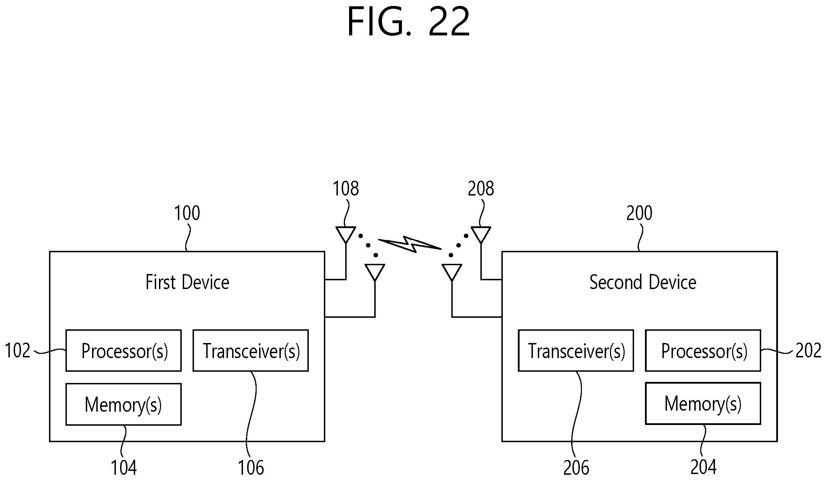

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

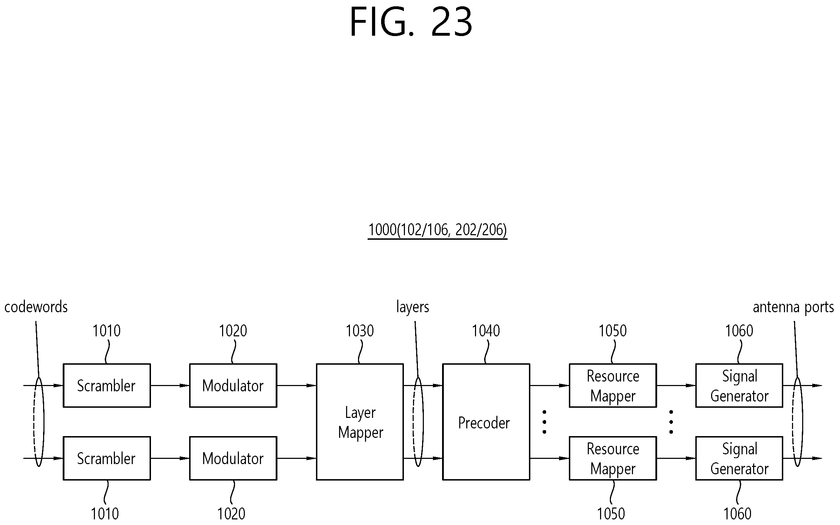

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

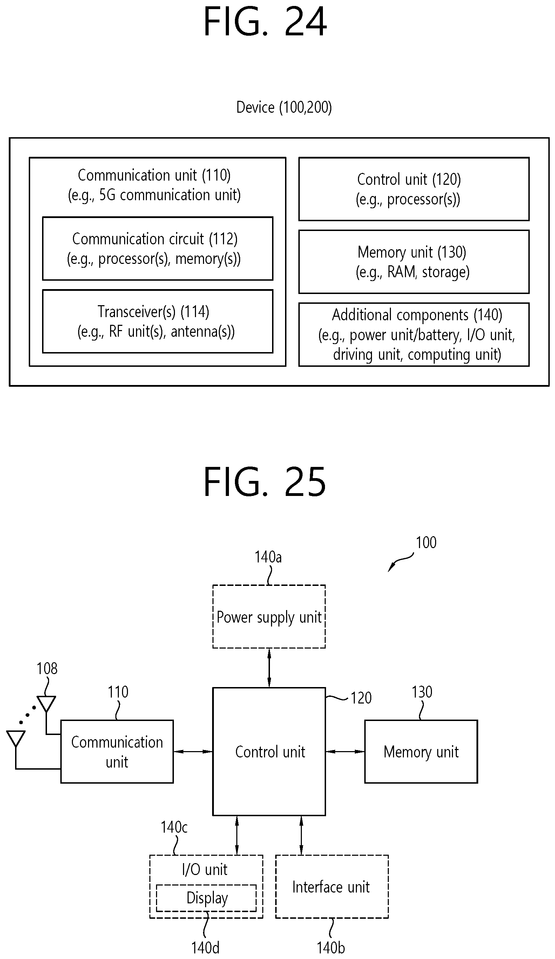

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

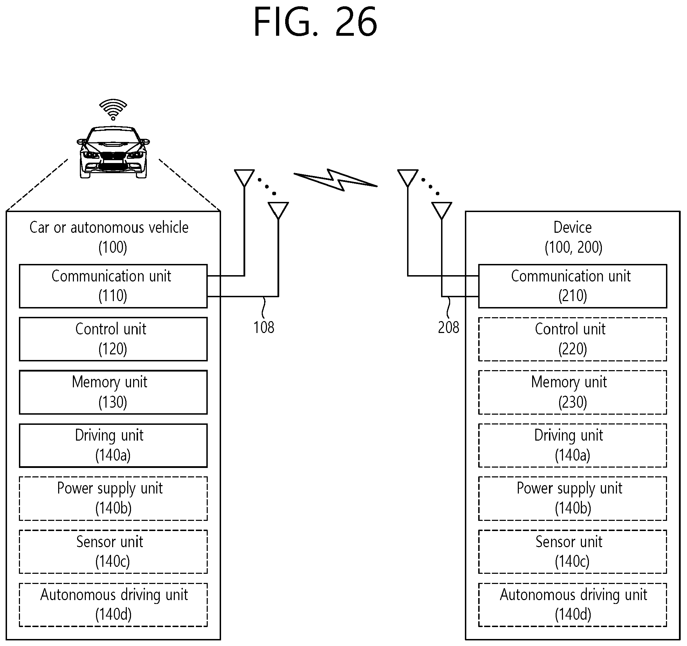

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

**1.** A method for performing wireless communication by a first device, the method comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
transmitting a direct communication request (DCR) message including information related to a service related to sidelink (SL) positioning; and
receiving a direct communication accept (DCA) message related to the DCR message.

**2.** The method of claim 1,
wherein the information related to the service includes information for requesting participation in the service related to the SL positioning.

**3.** The method of claim 1,
wherein the information related to the service includes information representing the service related to the SL positioning.

**4.** The method of claim 1,
wherein the information related to the service includes a destination ID mapping to the service related to the SL positioning.

**5.** The method of claim 1,
wherein the information related to the service includes information related to a method of the SL positioning.

**6.** The method of claim 1,
wherein the information related to the service includes information related to a mode related to the SL positioning.

**7.** The method of claim 1, further comprising:
establishing, based on that the DCA message is received from a second device, a PC5 connection with the second device.

**8.** The method of claim 1, further comprising:

transmitting a request message for requesting assistant data for the SL positioning,
wherein the request message includes the information related to the PRS configuration.

**9.** The method of claim 1, further comprising:

receiving, from the second device, assistant data for the SL positioning,
wherein the assistant data includes information for a set of resources configured for the second device.

**10.** The method of claim 1, further comprising:

receiving, from a third device, request information requesting a positioning report related to the SL position or a measurement report related to the SL position; and

transmitting, to the third device, the positioning report or the measurement report.

**11.** The method of claim 10,
wherein the measurement report includes entity information related to measurement related to the SL position.

**12.** The method of claim 1, further comprising:

transmitting, to a base station or a location management function (LMF), request information for calculating a location of the first device via a physical uplink control channel (PUCCH) or a physical uplink shared channel (PUSCH); and
receiving, from the base station or the LMF, information related to the location of the first device.

**13.** The method of claim 12, further comprising:

transmitting, to a third device, a scheduling request (SR) for requesting a resource for the PUCCH or the PUSCH, wherein the SR includes an ID related to the request information.

**14.** A first device performing wireless communication, the first device comprising:

at least one transceiver;
at least one processor; and
at least one memory connected to the at least one processor and storing instructions that, based on being executed by the at least one processor, cause the first device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
transmitting a direct communication request (DCR) message including information related to a service related to sidelink (SL) positioning; and
receiving a direct communication accept (DCA) message related to the DCR message.

**15.** An apparatus configured to control a first device, the apparatus comprising:

at least one processor; and
at least one memory connected to the at least one processor and storing instructions that, based on being executed by the at least one processor, cause the first device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
transmitting a direct communication request (DCR) message including information related to a service related to sidelink (SL) positioning; and
receiving a direct communication accept (DCA) message related to the DCR message.

**16.** A non-transitory computer-readable storage medium storing instructions that, based on being executed by at least one processor, cause the first device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
transmitting a direct communication request (DCR) message including information related to a service related to sidelink (SL) positioning; and
receiving a direct communication accept (DCA) message related to the DCR message.

**17.** A method for performing wireless communication by a second device, the method comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
receiving a direct communication request (DCR) message including information related to a service related to sidelink (SL) positioning; and
transmitting a direct communication accept (DCA) message related to the DCR message.

**18.** A second device performing wireless communication, the second device comprising:

at least one transceiver;
at least one processor; and
at least one memory connected to the at least one processor and storing instructions that, based on being executed by the at least one processor, cause the second device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
receiving a direct communication request (DCR) message including information related to a service related to sidelink (SL) positioning; and
transmitting a direct communication accept (DCA) message related to the DCR message.

**19.** An apparatus configured to control a second device, the apparatus comprising:

at least one processor; and
at least one memory connected to the at least one processor and storing instructions that, based on being executed by the at least one processor, cause the second device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
receiving a direct communication request (DCR) message including information related to a service related to sidelink (SL) positioning; and
transmitting a direct communication accept (DCA) message related to the DCR message.

**20.** A non-transitory computer-readable storage medium storing instructions that, based on being executed by at least one processor, cause the second device to perform operations comprising:

obtaining information related to a positioning reference signal (PRS) configuration,
wherein the information related to the PRS configuration includes at least one of information related to an ID of a PRS resource, information related to an ID of a PRS sequence, information related to a starting slot of the PRS resource, or information related to a starting symbol of the PRS resource;
receiving a direct communication request (DCR) message including information related to a service related to sidelink (SL) positioning; and
transmitting a direct communication accept (DCA) message related to the DCR message.

FIG. 1


eHealth remote monitoring
UM MIMO BS
Robotics & automation
FSO backhaul
Smart City
Autonomous vehicle
VLC
Drone network
M2M & M2H comunication
Ground/satellite integration
M-UE
UM-MIMO BS
UAV BS
Smart Home
VLC
VR
sCell-UE
sCell-APs
sCell-UE
Dense sCell-RAN
sCell-APs
sCell-APs
sCell-UE
New virtual world
3D virtual cordination
virtual remote assistance
3D Story virtualization
3D gaming
AR
M-UE
MR
Controller
UAV network
UE
Five Senses
Touch
Smell
Hear
Sight
Taste
BCI and AI
SDN
FSO communication
Underwater communication

FIG. 2

Wavelength
Radiation Type
Frequency
Radio
Microwave
mmWave
Terahertz
Infrared
Visible
Ultraviolet
X-Ray
Gamma-Ray
$10^8$ m
1m
10mm
1mm
0.1mm
700nm
390nm
10nm
0.01nm
3 Hz
300 MHz
30 GHz
300 GHz
3 THz
430 THz
730 THz
30 PHz
30 EHz
Mega : $10^6$
Giga : $10^9$
Tera : $10^{12}$
Peta : $10^{15}$
Exa : $10^{18}$

# FIG. 3

AMF/UPF
AMF/UPF
30
5GC
NG
NG
NG
NG
20
Xn
NG-RAN
gNB
gNB
Xn
Xn
gNB
10

FIG. 4
UE
SDAP
PDCP
RLC
MAC
PHY
gNB
SDAP
PDCP
RLC
MAC
PHY
(a)
UE
NAS
RRC
PDCP
RLC
MAC
PHY
gNB
RRC
PDCP
RLC
MAC
PHY
AMF
NAS
(b)
UE A
SDAP
PDCP
RLC
MAC
PHY
UE B
SDAP
PDCP
RLC
MAC
PHY
PC5-U
(c)
UE A
RRC
PDCP
RLC
MAC
PHY
UE B
RRC
PDCP
RLC
MAC
PHY
PC5-C
(d)

# FIG. 5

One Frame (10ms)
Half-Frame (5ms)
Half-Frame (5ms)
Subframe 0 (1ms)
Subframe 4 (1ms)
Subframe 5 (1ms)
Subframe 9 (1ms)
Subframe (1ms)
15KHz
Slot 0 (14symbols)
1ms
30KHz
Slot 0 (14symbols)
Slot 1
500us
60KHz
Slot 0 (14symbols)
Slot 1
Slot 2
Slot 3
250us
120KHz
Slot 0 (14symbols)
Slot 1
Slot 2
Slot 3
Slot 4
Slot 5
Slot 6
Slot 7
125us

Resource grid
k=0
l=0
1 RE
1 symbol
1subcarrier
1RB=12 subcarriers
A BWP
A carrier
(up to 3300 subcarriers,
i.e., 275 RBs)

FIG. 6

# FIG. 7

PRB N3
PRB 1
PRB 0
PRB N2
PRB 1
PRB 0
PRB N1
PRB 1
PRB 0
CRB 0
$N^{size}_{BWP, 2}$
$N^{size}_{BWP, 1}$
$N^{size}_{BWP, 0}$
$N^{start}_{BWP, 0}$
$N^{start}_{BWP, 1}$
$N^{start}_{BWP, 2}$
Carrier Bandwidth
Freq.
Time
PRB 0 (Point A) in reference resource block

# FIG. 8

BS
first UE
second UE
first UE
second UE
resource scheduling
S800
PSCCH
S810
PSSCH
S820
PSFCH
S830
PUCCH/PUSCH
S840
PSCCH
S810
PSSCH
S820
PSFCH
S830
(a)
(b)

# FIG. 9

(a)
(b)
(c)
: TX UE
: RX UE

FIG. 10

GNSS
Directly
synchronized to GNSS
(Out Coverage)
Indirectly
synchronized to GNSS
Directly
synchronized to GNSS
(In Coverage)
BS
Network Coverage
Directly
synchronized to BS
Indirectly
synchronized to BS
Independent
synchronization source

FIG. 11

E-SMLC
SLP
LMF
NLs
AMF
NG-C
(Note 2)
NG-C
(Note 2)
TP
ng-eNB
(Note 1)
TP
Xn
gNB
(Note 1)
NG-RAN
LTE-Uu
NR-Uu
UE
SET

UE
NG-RAN
AMF
LMF
5GC LCS Entities
1a. Location Service Request
1b. Location Service Request
2. Location Services Request
3a. NG-RAN Procedures
3b. UE Procedures
4. Location Service Response
5a. Location Services Response
5b. Location Service Response

FIG. 12

FIG. 13

UE
LPP
NAS
RRC
PDCP
RLC
MAC
L1
NR-Uu
LTE-Uu
NG RAN
Relay
RRC
NGAP
PDCP
SCTP
RLC
IP
MAC
L2
L1
L1
NG-C
AMF
Relay
RRC
HTTP/2
NGAP
SCTP
TLS
TCP
IP
IP
L2
L2
L1
L1
NLs
LMF
LPP
HTTP/2
TLS
TCP
IP
L2
L1

# FIG. 14

NRPPa
NGAP
SCTP
IP
L2
L1
NG RAN
NG-C
NGAP
HTTP/2
SCTP
TLS
TCP
IP
IP
L2
L2
L1
L1
AMF
NLs
NRPPa
HTTP/2
TLS
TCP
IP
L2
L1
LMF

# FIG. 15

BS A
(anchor cell)
BS B
BS C

# FIG. 16

T round 1
T reply 2
UE 1
SL-PRS 1
SL-PRS 2
SL-PRS 3 or
SL-PRS 1
repetition
UE 2
T
T reply 1
T round 2

# FIG. 17

Target UE
Server UE 1
Server UE 2
Server UE 3
S1710
SL positioning request
SL positioning request
SL positioning request
S1720
SL positioning accept
SL positioning accept
S1730
SL positioning group
SL positioning group

FIG. 18

Target UE
Server UE
Obtaining information related to PRS configuration
S1810
DCR message
(including SL positioning request)
S1820
DCA message
S1830
Establishing PC5 connection
S1830
Establishing SL positioning group
S1832

# FIG. 19

Obtaining information related to a PRS configuration
S1910
Transmitting a DCR message including information related to a service related to SL positioning
S1920
Receiving a DCA message related to DCR message
S1930

# FIG. 20

Obtaining information related to a PRS configuration
S2010
Receiving a DCR message including information related to a service related to SL positioning
S2020
Transmitting a DCA message related to DCR message
S2030

FIG. 21

1
IoT device
100f
AI Server/device
400
Robot
100a
150a
150a
150a
200a
200
Home Appliance
100e
150a
Network
(5G)
300
200
200
200
150c
Hand-held
device
100d
150a
XR device
100c
150a
Vehicle
100b-1
150a
150b
Vehicle
100b-2

FIG. 22

200
Second Device
202
Processor(s)
Memory(s)
204
Transceiver(s)
206
208
108
100
First Device
Transceiver(s)
106
Processor(s)
Memory(s)
104
102

FIG. 23

1000(102/106, 202/206)

codewords
1010 Scrambler
1010 Scrambler
1020 Modulator
1020 Modulator
1030 Layer Mapper
layers
1040 Precoder
1050 Resource Mapper
1050 Resource Mapper
1060 Signal Generator
1060 Signal Generator
antenna ports

# FIG. 24

Device (100,200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit, driving unit, computing unit)

# FIG. 25

100
140a
Power supply unit
108
110
Communication unit
Control unit
120
130
Memory unit
140c
I/O unit
Display
Interface unit
140d
140b

FIG. 26

Car or autonomous vehicle
(100)
Communication unit
(110)
Control unit
(120)
Memory unit
(130)
Driving unit
(140a)
Power supply unit
(140b)
Sensor unit
(140c)
Autonomous driving unit
(140d)
108
208
Device
(100, 200)
Communication unit
(210)
Control unit
(220)
Memory unit
(230)
Driving unit
(140a)
Power supply unit
(140b)
Sensor unit
(140c)
Autonomous driving unit
(140d)

**INTERNATIONAL SEARCH REPORT**

International application No. **PCT/KR2023/010578**

**A. CLASSIFICATION OF SUBJECT MATTER**

**H04W 24/08**(2009.01)i; **H04W 72/02**(2009.01)i; **H04W 72/20**(2023.01)i; **H04W 72/04**(2009.01)i; **H04L 5/00**(2006.01)i

According to International Patent Classification (IPC) or to both national classification and IPC

**B. FIELDS SEARCHED**

Minimum documentation searched (classification system followed by classification symbols)

H04W 24/08(2009.01); H04L 5/00(2006.01); H04W 24/10(2009.01); H04W 4/40(2018.01); H04W 64/00(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: target, source, SL(sidelink), positioning, PRS(positioning reference signal), resource ID, sequence ID, start slot, start symbol, DCR(direct communication request), SL positioning request, DCA(direct communication accept), PC5

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2022-0005582 A (LG ELECTRONICS INC.) 13 January 2022 (2022-01-13)<br>See paragraphs [0145]-[0171]; and figures 18-22. | 1-3,7-11,14-20<br>4-6,12-13 |
| Y | KR 10-2182172 B1 (LG ELECTRONICS INC.) 24 November 2020 (2020-11-24)<br>See claim 1. | 1-3,7-11,14-20 |
| Y | US 2021-0029761 A1 (LG ELECTRONICS INC.) 28 January 2021 (2021-01-28)<br>See paragraph [0269]; and figure 18. | 7 |
| A | KR 10-2019-0120069 A (KT CORPORATION) 23 October 2019 (2019-10-23)<br>See paragraphs [0111]-[0171]; and figures 14-15. | 1-20 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 October 2023** | **19 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/010578

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0059613 A (ASUSTEK COMPUTER INCORPORATION) 25 May 2021 (2021-05-25) See paragraphs [0116]-[0418]; and figures 6-16. | 1-20 |

Form PCT/ISA/210 (second sheet) (July 2022)

**INTERNATIONAL SEARCH REPORT**
**Information on patent family members**

International application No.
**PCT/KR2023/010578**

| Patent document cited in search report | Publication date (day/month/year) | Patent family member(s) | Publication date (day/month/year) |
|---|---|---|---|
| KR 10-2022-0005582 A | 13 January 2022 | US 2022-0236365 A1 | 28 July 2022 |
| | | WO 2020-246842 A1 | 10 December 2020 |
| KR 10-2182172 B1 | 24 November 2020 | CN 112237035 A | 15 January 2021 |
| | | CN 112237035 B | 07 April 2023 |
| | | EP 3751920 A1 | 16 December 2020 |
| | | EP 3751920 A4 | 05 May 2021 |
| | | JP 2021-513776 A | 27 May 2021 |
| | | JP 7096343 B2 | 05 July 2022 |
| | | KR 10-2020-0087720 A | 21 July 2020 |
| | | US 2020-0367193 A1 | 19 November 2020 |
| | | WO 2020-145739 A1 | 16 July 2020 |
| US 2021-0029761 A1 | 28 January 2021 | US 11672035 B2 | 06 June 2023 |
| | | WO 2019-240544 A1 | 19 December 2019 |
| KR 10-2019-0120069 A | 23 October 2019 | CN 111989886 A | 24 November 2020 |
| | | KR 10-2460799 B1 | 03 November 2022 |
| | | US 2021-0120522 A1 | 22 April 2021 |
| KR 10-2021-0059613 A | 25 May 2021 | CN 112804756 A | 14 May 2021 |
| | | CN 112804756 B | 17 May 2022 |
| | | EP 3823410 A1 | 19 May 2021 |
| | | EP 3823410 B1 | 29 June 2022 |
| | | ES 2924692 T3 | 10 October 2022 |
| | | JP 2021-083082 A | 27 May 2021 |
| | | JP 6970267 B2 | 24 November 2021 |
| | | KR 10-2295732 B1 | 31 August 2021 |
| | | TW 202119861 A | 16 May 2021 |
| | | TW I755915 B | 21 February 2022 |
| | | US 11147080 B2 | 12 October 2021 |
| | | US 11582768 B2 | 14 February 2023 |
| | | US 2021-0144727 A1 | 13 May 2021 |
| | | US 2021-0410153 A1 | 30 December 2021 |

Form PCT/ISA/210 (patent family annex) (July 2022)